(19) Europäisches Patentamt
European Patent Office
Office européen des brevets

(11) **EP 3 344 438 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **16762753.8**

(22) Anmeldetag: **26.08.2016**

(51) Int Cl.:
*B29C 67/00* (2017.01)     *C08K 3/34* (2006.01)
*B33Y 70/00* (2015.01)

(86) Internationale Anmeldenummer:
**PCT/EP2016/070220**

(87) Internationale Veröffentlichungsnummer:
**WO 2018/036640 (01.03.2018 Gazette 2018/09)**

(54) **VERFAHREN ZUR HERSTELLUNG VON FORMKÖRPERN**

METHOD FOR PRODUCING SHAPED BODIES

PROCÉDÉ DE FABRICATION DE CORPS FAÇONNÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.07.2018 Patentblatt 2018/28**

(73) Patentinhaber: **Wacker Chemie AG**
**81737 München (DE)**

(72) Erfinder:
• **GOTTSCHALK-GAUDIG, Torsten**
**84561 Mehring (DE)**

• **DORMEIER, Siegfried**
**94166 Stubenberg (DE)**

(74) Vertreter: **Bitterlich, Bianca et al**
**Wacker Chemie AG**
**Intellectual Property**
**Hanns-Seidel-Platz 4**
**81737 München (DE)**

(56) Entgegenhaltungen:
**US-A1- 2005 053 798     US-A1- 2013 337 277**

**Beschreibung**

Die Erfindung betrifft ein generatives Verfahren zur Herstellung von dreidimensionalen Formkörpern, welches dadurch gekennzeichnet ist, dass der Formkörper schrittweise aufgebaut wird, indem das strukturbildende Material in flüssiger Form ortsspezifisch ausgebracht wird, wobei zusätzlich ein zweites Material als Stützmaterial in Bereiche ausgebracht wird, die frei von dem strukturbildenden Material bleiben sollen und nach der Verfestigung des strukturbildenden Materials entfernt wird.

**Stand der Technik**

Generative Fertigungsverfahren stehen für zahlreiche Materialien sowie deren Kombinationen zur Verfügung (z.B. Metalle, Kunststoffe, Keramiken, Gläser).

Für die Herstellung von Formkörpern durch die ortsspezifische Ausbringung eines flüssigen strukturbildenden Materials (sbM) stehen unterschiedliche Verarbeitungsverfahren zur Verfügung.

Im Fall hochviskoser oder pastöser sbM können diese in Form einer Raupe mittels einer Düse ausgebracht und ortsspezifisch abgelegt werden. Das Ausbringen durch die Düse kann beispielsweise durch Druck oder durch einen Extruder erfolgen. Ein typisches Beispiel für dieses Verarbeitungsverfahren ist der 3D-Filament-Druck. Ein weiteres bekanntes Verfahren beruht auf der ballistischen Dosierung kleiner Mengen an sbM in Form von Tröpfchen, die mittels Druckköpfen ortsspezifisch ausgebracht werden. Im Fall von niederviskosen, nicht oder kaum scherverdünnenden Tinten wird das Verfahren Inkjet-Printing genannt, bei höherviskosen, scherverdünnenden Materialen ist die Bezeichnung Jetting gebräuchlich.

Voraussetzung aller generativen Herstellverfahren ist die Darstellung der Geometrie sowie ggf. weiterer Eigenschaften (Farbe, Materialzusammensetzung) des gewünschten Formkörpers in Form eines digitalen 3D-Datensatzes, welcher als virtuelles Modell des Formkörpers verstanden werden kann (A. Gebhardt, Generative Fertigungsverfahren, Carl Hanser Verlag, München 2013). Diese Modellierung erfolgt vorzugsweise mittels diverser 3D-CAD-Konstruktionsverfahren (*computer-aided design*). Als Eingangsdaten für die Erstellung eines 3D CAD-Modells können auch 3D-Messdaten dienen, wie diese z.B. aus CT-Messungen (Computer Tomographie) oder MRT-Messungen (Magnet Resonanz Tomographie) resultieren. Der 3D CAD-Datensatz muss nachfolgend durch material-, verfahrens- und anlagenspezifische Daten ergänzt werden, was dadurch erfolgt, dass dieser über eine Schnittstelle (Interface) in einem geeigneten Format (wie z.B. STL-, CLI/SLC-, PLY-, VRML-, AMF-Format) an eine Additive Manufacturing Software übergeben wird. Diese Software erzeugt aus den geometrischen Informationen letztlich virtuelle Einzelschichten (*slicen*), wobei die optimale Orientierung des Bauteils im Bauraum, Stützstrukturen etc. Berücksichtigung erfahren. Der vollständige Datensatz erlaubt dann die direkte Ansteuerung der für die generative Fertigung eingesetzten Maschine (3D-Drucker).

Der Software-Ablauf ist wie folgt:

1. Konstruktion des Bauteils im CAD-Format
2. Export in das STL-Datenformat
3. Aufteilung des 3D-Modells in Schichten parallel zur Druckebene und Generierung des GCode
4. Übertragung des GCode an die Druckersteuerung

Allen generativen Herstellverfahren mit ortsspezifischer Ausbringung des sbM gemein ist die Notwendigkeit von Stützstrukturen in Bereichen von Hohlräumen, Hinter- und Unterschneidungen bzw. Überhängen, da die ortsspezifische Ausbringung der sbM bis zur Aushärtung des sbM immer einer unterstützenden Oberfläche bedarf. Entsprechende Stützmaterialen (SM) zur Erzeugung von Hilfsstrukturen sind bekannt.

US 2015/0028523 A1 beschreibt den Einsatz eines thermoplastischen Polymers auf Basis von Polyglycolsäure als SM für den Filamentdruck. Nachteilig ist hier, dass das thermoplastische SM auf hohe Temperaturen von 200 °C und höher erwärmt werden muss und zur Entfernung des SM beispielsweise mit wässriger alkalischer Lösung gearbeitet werden muss.

US 2013/0337277 A1 beschreibt den Einsatz strahlenvernetzender Blockcopolymere z. B. auf Basis acrylatisierter Polyethylenglycol-Polycaprolacton-Blockcopolymere als temporäre SM. Durch die Strahlungsvernetzung in Anwesenheit von Wasser entstehen Hydrogele, die durch enzymatische Zersetzung entfernt werden können. Es zeigte sich, dass die Bildung der chemischen Gele durch Vernetzung langsam und der enzymatische Abbau zeitaufwändig ist und eine geeignete Lagerung der eingesetzten Lipasen voraussetzt. Zudem weisen Hydrogele den inhärenten Nachteil auf, dass während des Aufbaus der Zielstruktur, Wasser verdunsten kann und es damit zu einem Schrumpfen der Hilfsstruktur kommen kann.

Dieses Problem tritt auch bei Hydrogelen auf der Basis von partikulären Gelbildnern wie Schichtsilikaten bzw. Kieselsäuren auf. So zeigten Versuche mit wässrigen Dispersionen von Bentoniten, dass sich hinreichend stabile Gele erzeugen lassen, die anfänglich geeignete Stützstrukturen liefern. Während des Druckprozesses, der unter Umständen einige Stunden dauern kann, kann es jedoch zu einem Formverlust in Folge der Verdunstung von Wasser kommen.

US 7368484 B2 beschreibt die Nutzung der Reverse Thermal Gelation zur Bildung von Hilfsstrukturen. Dabei wird die reversible Gelbildung von Copolymeren unter Temperaturerhöhung ausgenützt. Da die Festigkeit dieser Gele jedoch nicht hinreichend ist, wird zusätzlich noch eine partielle Strahlenvernetzung benötigt, was die spätere Entfernung der Hilfsstrukturen erschwert.

WO 2014/092205 A1 erwähnt die Nutzung von Polyethylenglycol, insbesondere PEG 2000, zur Bildung von Hilfsstrukturen. Dabei wird der niedrigere Schmelzpunkt des PEG 2000 im Vergleich zu dem thermoplastischem sbM ausgenützt. Als generatives Herstellverfahren wird hier das sogenannte "laminated object manufacturing" eingesetzt, bei dem ganze Schichten, d.h. Laminate, des sbM abgelegt werden. Es zeigte sich jedoch, dass die ausschließliche Nutzung eines PEGs wie z.B. PEG 2000 beim ortsspezifischen parallelen Ausbringen von Elastomeren und Stützmaterial beispielsweise in Form von Einzeltropfen, nachteilig ist. So weist die Stützmasse nach dem Abkühlen einen ausgeprägten Schrumpf auf, der die Formtreue des eigentlichen Bauteils nachteilig beeinflusst. Ferner hat die PEG-Schmelze eine geringe Formstabilität, so dass die Tropfen nach dem ortsspezifischen Ausbringen verlaufen und das Drucken feiner Strukturen damit nicht möglich ist.

Insgesamt kann festgestellt werden, dass kein im Stand der Technik offenbartes Verfahren geeignet ist, um einfache Hilfsstrukturen für generative Fertigungsverfahren mit ortsspezifischer Ausbringung des sbM herzustellen, die im 3D-Druck eine hohe Stabilität aufweisen, geringen Schrumpf besitzen und sich anschließend problemlos wieder entfernen lassen.

Aufgabe der vorliegenden Erfindung war es daher, die Bereitstellung eines generativen (= additiven) Verfahrens zur Herstellung von 3-dimensionalen Formkörpern, welches erlaubt neben der ortsspezifischen Ausbringung des strukturbildenden Materials (sbM) auch ortspezifische Hilfsstrukturen aus Stützmaterial (SM) in einfacher und kostengünstiger Weise sowohl aufzubauen als auch wieder zu entfernen. Dabei soll das SM schnell seine stützenden Eigenschaften ausbilden, die stützenden Eigenschaften während des Verfahrens beibehalten, und anschließend einfach wieder entfernt werden, ohne den Formkörper zu beschädigen oder seine Eigenschaften negativ zu beeinflussen. Darüber hinaus, soll das SM einen geringen Schrumpf beim Abkühlen zeigen, bei Temperaturen unter 60 °C besonders stabil sein und zusätzlich eine geringe Oberflächenrauigkeit aufweisen.

Diese Aufgabe wird durch das erfindungsgemäße Verfahren gelöst.

## Das erfindungsgemäße Verfahren

Beim erfindungsgemäßen Verfahren handelt es sich um ein Verfahren zum additiven Aufbau von Formkörpern (8) durch ortsspezifische Ausbringung eines strukturbildenden Materials (sbM)(=6b), dadurch gekennzeichnet, dass gleichzeitig oder zeitlich versetzt mindestens ein Stützmaterial (SM)=(6a) in Bereiche ausgebracht wird, die frei von sbM (6b) bleiben,

wobei das Ausbringen des SM (6a) über eine Vorrichtung erfolgt, die mindestens eine Ausbringeinheit (1a) für das SM (6a) aufweist, die in

x-, y- und z-Richtung mit einer Genauigkeit von mindestens $\pm$ 100 $\mu$m positioniert werden kann, und somit durch das ortsspezifische Ausbringen des SM (6a) sowohl in der x,y-Arbeitsebene als auch in z-Richtung die Stützstruktur aus SM (6a) für den Formkörper (8) sukzessive aufbaut,

mit der Maßgabe, dass das SM (6a)

- eine Zusammensetzung ist, die bei 70°C strukturviskose, viskoelastische Eigenschaften aufweist, enthaltend

    (A) eine Polyetherzusammensetzung umfassend

      (A1) mindestens einen ersten Polyether mit einem Festpunkt von unter 35 °C und
      (A2) mindestens einen zweiten Polyether mit einem Festpunkt von 35 °C oder darüber,
      wobei der Anteil des zweiten Polyethers bezogen auf das Gesamtgewicht der Polyetherzusammensetzung 5 Gew.-% oder mehr bis 70 Gew.-% oder weniger beträgt, und

    (B) mindestens ein partikuläres rheologisches Additiv,
    (C) optional weitere Zusatzstoffe

- eine Scherviskosität von höchstens 10 Pas aufweist (gemessen bei 70°C und einer Scherrate von 100 s$^{-1}$),
- einen Speichermodul G' von mindestens 100 Pa und
- eine Verfestigungstemperatur von 20 °C oder mehr bis 60 °C oder weniger aufweist,

und nach Abschluss des Aufbaus des Formkörpers (8), das SM (6a) aus dem Formkörper (8) entfernt wird.

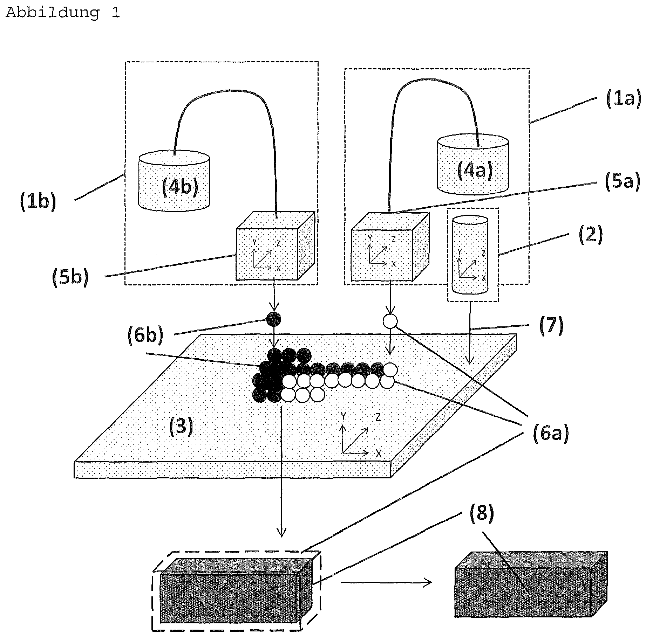

Abbildung 1 zeigt schematisch ein Beispiel wie eine erfindungsgemäße generative Fertigungsanlage aufgebaut sein kann, mit der das erfindungsgemäße Verfahren zur Herstellung von Siliconelastomerteilen (8) mit Hilfsstrukturen (6a) durchgeführt wird. Das strukturviskose viskoelastische SM (6a) befindet sich im Reservoir (4a) eines Einzeldosiersystems (1a), welches mit Druck beaufschlagt ist und über eine Dosierleitung mit einer Dosierdüse (5a) verbunden ist. Dem Reservoir (4a) können Einrichtungen vor- oder nachgeschaltet sein, die es ermöglichen, gelöste Gase durch Evakuieren zu entfernen. Über ein weiteres unabhängig voneinander arbeitendes Einzeldosiersystem (1b) wird das sbM (6b) ausgebracht. (1b) ist ebenfalls ausgestattet mit einem Reservoir (4b), welches über eine Dosierleitung mit einer Dosierdüse (5b) verbunden ist. Auch dem Reservoir (4b) können Einrichtungen vor- oder nachgeschaltet sein, die es ermöglichen, gelöste Gase durch Evakuieren zu entfernen.

Die einzelnen Dosierdüsen (5a) und (5b) können unabhängig voneinander in x-,y- und z-Richtung akkurat positioniert werden, um ein zielgenaues Abscheiden des SM (6a) bzw. des sbM (6b) auf der Basisplatte 3, die vorzugsweise beheizbar ist und ebenfalls in x-, y- und z-Richtung positioniert werden kann, bzw. im späteren Verlauf der Formteilentstehung auf der bereits platzierten SM (6a) bzw. bereits platzierten ggf. bereits vernetzten sbM (6b) zu ermöglichen.

Ferner können eine oder mehrere Strahlungsquellen (2) zur Vernetzung des sbM (6b) vorhanden sein, die vorzugsweise ebenfalls in x-,y- und z-Richtung akkurat positioniert werden können, und mittels Strahlung (7) das sbM (6b) anvernetzen oder ganz vernetzen.

Bevorzugt werden zur Positionierung der Dosierdüsen (5a) und (5b) Verfahr-Einheiten mit hoher Wiederholgenauigkeit verwendet. Die zum Positionieren der Dosierdüsen (5a) und (5b) verwendete Verfahr-Einheit hat eine Genauigkeit von mindestens $\pm$ 100 $\mu$m, vorzugsweise von mindestens $\pm$ 25 $\mu$m, jeweils in alle drei Raumrichtungen. Die maximale Geschwindigkeit der verwendeten Verfahr-Einheiten bestimmt maßgeblich die Herstellungszeit des Formteils (8) und sollte daher mindestens 0,1 m/s, vorzugsweise mindestens 0,3 m/s, besonders bevorzugt mindestens 0,4 m/s betragen.

Bevorzugt werden Dosierdüsen (5a) und (5b), die ein Jetting flüssiger Medien mittlerer bis hoher Viskosität ermöglichen. Als solche kommen insbesondere (thermische) Bubble-Jet- und Piezo-Druckköpfe in Frage, wobei Piezo-Druckköpfe besonders bevorzugt sind. Letztere ermöglichen das Jetting sowohl niedrigviskoser Materialien, wobei Tropfenvolumen von einigen wenigen Pikolitern (2 pL entsprechen einem Punktedurchmesser von ca. 0,035 $\mu$m) realisiert werden können, als auch mittel- und hochviskoser Materialien wie der SM (6a), wobei Piezo-Druckköpfe mit einem Düsendurchmesser zwischen 50 und 500 $\mu$m bevorzugt werden und Tropfenvolumen im Nanoliter-Bereich (1 bis 100 nL) erzeugt werden können. Mit niedrigviskosen Massen (< 100 mPas) können diese Druckköpfe Tröpfchen mit sehr hoher Dosierfrequenz abscheiden (ca. 1 - 30 kHz), während mit höherviskosen Massen (> 100 mPas) in Abhängigkeit von den rheologischen Eigenschaften (scherverdünnendes Verhalten) Dosierfrequenzen bis zu ca. 500 Hz erzielt werden können.

Die zeitliche Abfolge des Aufbaus von Hilfsstrukturen (6a) bzw. Zielstrukturen (6b) ist stark abhängig von der gewünschten Geometrie des Formteils (8). So kann es zielführender oder sogar zwingend nötig sein, zuerst zumindest Teile der Hilfsstrukturen (6a) aufzubauen und anschließend die eigentliche Zielstruktur (6b) zu erzeugen. Es kann aber auch möglich sein, beide Strukturen parallel, d. h. ohne zeitlichen Versatz zu erzeugen, d.h. mittels Paralleldosierung aus zwei unabhängigen Dosiereinrichtungen. Unter Umständen ist zuerst der Aufbau von zumindest Teilen der Zielstruktur (6b) sinnvoller und dann ein nachträglicher zumindest teilweiser Aufbau von Stützstrukturen (6a). Gegebenenfalls ist bei einem Bauteil mit komplexer Geometrie der Einsatz aller möglichen Varianten notwendig.

Im Fall des Ausbringens flüssiger, unvernetzter sbM (6b) wie beispielsweise Acrylharze oder Siliconkautschukmassen, müssen diese zur Bildung stabiler Zielstukturen (8) vernetzt werden. Vorzugsweise erfolgt die Vernetzung des Tropfen für Tropfen deponierten sbM (6b) mittels einer oder mehrerer elektromagnetischer Strahlungsquellen (2) (z.B. IR-Laser, IR-Strahler, UV/VIS-Laser, UV-Lampe, LED), die vorzugsweise ebenfalls über eine Verfahrmöglichkeit in x-, y- und z-Richtung verfügen. Die Strahlungsquellen (2) können über Umlenkspiegel, Fokussiereinheiten, Strahlaufweitungssysteme, Scanner, Blenden etc. verfügen. Deponieren und Vernetzen müssen aufeinander abgestimmt werden. Das erfindungsgemäße Verfahren umfasst sämtliche diesbezüglich denkbare Möglichkeiten. Beispielsweise kann es notwendig sein, zunächst einen flächigen Bereich der x,y-Arbeitsebene mit Tropfen der sbM (6b) zu belegen und eine Nivellierung (Ineinanderfließen) abzuwarten, um erst dann diesen Bereich flächig zu bestrahlen und zu vernetzen. Ebenso kann es sinnvoll sein, die aufgebrachte Fläche zwecks Konturierung zunächst nur im Randbereich zu verfestigen und anschließend den Innenbereich durch geeignete Schraffuren anzuvernetzen. Es kann auch notwendig sein, einzelne Tropfen unmittelbar nach deren Platzierung zu vernetzen oder anzuvernetzen, um ein Verlaufen zu verhindern. Es kann zweckmäßig sein, den gesamten Arbeitsbereich während der Formteilbildung permanent zu bestrahlen, um vollständige Vernetzung zu erzielen, oder nur kurzzeitig der Strahlung auszusetzen, um gezielt eine unvollständige Vernetzung (Grünfestigkeit) herbeizuführen, was u.U. mit einer besseren Haftung der Einzelschichten untereinander einhergehen kann. Folglich wird es im Allgemeinen notwendig sein, die das Deponieren und Vernetzen bestimmenden Parameter in Abhängigkeit vom Vernetzungssystem, dem rheologischen Verhalten und den Haftungseigenschaften der sbM (6b) sowie ggf. der übrigen eingesetzten Materialien aufeinander abzustimmen.

Vorzugsweise werden als sbM (6b) flüssige Acrylate, Acrylat-Silicone-Copolymere bzw. deren physikalische Mischungen, acrylfunktionelle Silicone oder reine Siliconkautschukmassen verwendet. Bevorzugt ist die Verwendung von Acrylat-Silicone-Copolymeren bzw. deren physikalische Mischungen, acrylfunktionelle Siliconen oder reine Siliconkautschukmassen, besonders bevorzugt von acrylfunktionellen Siliconen oder reine Siliconkautschukmassen und in einer speziellen Ausführung von Siliconkautschukmassen, insbesondere von strahlungsvernetzenden Siliconkautschukmassen.

Um eine Verschmutzung der Dosierdüsen zu vermeiden bzw. zu beseitigen, kann die in Abb. 1 gezeigte Anlage durch eine automatisch arbeitende Dosierdüsen-Reinigungsstation ergänzt werden.

Die Einzeldosiersysteme können über eine Temperiereinheit verfügen, um das rheologische Verhalten der Materialien zu konditionieren und/oder die Viskositätserniedrigung durch erhöhte Temperaturen für das Jetting auszunutzen.

Vorzugsweise sind zumindest für die erfindungsgemäß eingesetzte SM (6a) das Einzeldosiersystem (1b), das Reservoir (4b) und ggf. die Dosierleitung mit Temperiereinheiten versehen.

Gegebenenfalls kann das Einzeldosiersystem (1a) das SM (6a) auch in Form einer dünnen Raupe, d.h. nach dem Dispensing-Verfahren ausbringen. Insbesondere bei größeren, flächigen Strukturen hat dieses Verfahren Vorteile, z.B. im Hinblick auf die Druckgeschwindigkeit.

Das erfindungsgemäße Verfahren zur Erzeugung von Stützstrukturen (6a) kann mit allen bekannten Verfahren zum additiven Aufbau von Strukturen kombiniert werden, bei denen das strukturbildende Material (sbM) = (6b) in flüssiger Form ortsspezifisch ausgebracht wird. Dazu zählen der Filamentdruck, das Dispensen, Inkjet-Verfahren und das Jetten. Bevorzugt ist das Dispensen und Jetten von mittel- bis hochviskosen, scherverdünnenden flüssigen sbM (6b), besonders bevorzugt ist das Dispensen und Jetten von additionsvernetzenden Siliconeelastomeren und in einer speziellen Ausführung das Jetten von UV-aktivierten oder strahlenvernetzenden Siliconeelastomeren.

Die gesamte beispielhaft in Abbildung 1 skizzierte Anlage kann auch in einer Vakuumkammer oder Inertgaskammer untergebracht sein, z.B. um UV-C-Strahlungsverluste durch Sauerstoff auszuschließen oder Lufteinschlüsse im Formteil zu vermeiden.

Vorzugsweise kann der Druckraum der Anlage oder die gesamte Anlage in einer Kammer zum Ausschluss von Luftfeuchte untergebracht sein, wobei die Kammer entweder von außen mit Trockenluft gespült werden kann oder die Luft in der Kammer durch Umpumpen durch eine Trockeneinheit, wie beispielsweise eine Trocknungspatrone mit Molsieb oder eine Kondensationseinheit, getrocknet wird.

Das im erfindungsgemäßen Verfahren verwendete, bei 70 °C strukturviskose, viskoelastische SM (6a) besteht vorzugsweise aus folgenden Komponenten:

(A)Polyetherzusammensetzung umfassend

(A1) mindestens einen ersten Polyether mit einem Festpunkt von unter 35 °C und
(A2) mindestens einen zweiten Polyether mit einem Festpunkt von 35 °C oder darüber,
wobei der Anteil des zweiten Polyethers (A2) bezogen auf das Gesamtgewicht der Polyetherzusammensetzung (A) 5 Gew.-% oder mehr bis 70 Gew.-% oder weniger beträgt,

B) Partikuläres Rheologieadditiv, und
C) optionale weitere Zusatzstoffe

Komponente (A)

Die Komponente A umfasst:

(A1) mindestens einen ersten Polyether mit einem Festpunkt von unter 35 °C, vorzugsweise 30 °C oder darunter, besonders bevorzugt 25 °C oder darunter, insbesondere 10 °C oder darunter und
(A2) mindestens einen zweiten Polyether mit einem Festpunkt von 35 °C oder darüber, vorzugsweise 40 °C oder darüber, besonders bevorzugt über 45 °C oder darüber, insbesondere 50 °C oder darüber, ganz besonders 55 °C oder darüber.

Bei den eingesetzten Polyethern handelt es sich üblicherweise um kommerzielle Produkte, die beispielsweise von der Fa. Clariant unter dem Handelsnamen Polyglykol vertrieben werden. Verfestigen sich Polyether in einem bestimmten Temperaturbereich (Verfestigungsbereich), wird unter dem Festpunkt eines Polyethers die untere Grenze des Verfestigungsbereichs verstanden. Die Festpunkte bzw. Verfestigungsbereiche der Polyether können unabhängig davon beispielsweise mittels DSC gemäß DIN EN ISO 11357-3 ermittelt werden. Dabei wird der Festpunkt bzw. Verfestigungsbereich mittels Dynamischer Differenz Thermoanalyse (DSC) bestimmt: Gerät DSC 1 von Mettler-Toledo, Modul-Typ: DSC1/500 (Modulname: DSC1_1448)): Probeneinwaage: 8,5 mg, Temperaturbereich -70 °C bis 150 °C, Heiz-/Kühlrate 10 K/min; gemessen wurden zwei Durchläufe (ein Durchlauf besteht aus folgendem Heiz- und Kühlzyklus: von -70 °C (10 K/min) bis 150 °C und von 150 °C (10 K/min) bis -70 °C) ; für die Auswertung wurde der zweite Lauf verwendet.

Der Anteil des zweiten Polyethers (A2) bezogen auf das Gesamtgewicht der Polyetherzusammensetzung (A) beträgt 5 Gew.-% oder mehr bis 70 Gew.-% oder weniger, bevorzugt 10 Gew.-% oder mehr bis 65 Gew.-% oder weniger, ganz besonders bevorzugt 15 Gew.-% oder mehr bis 60 Gew.-% oder weniger.

Wird der Anteil des zweiten Polyethers (A2) zu gering gewählt, zeigt das SM im abgekühlten Zustand eine geringere Stabilität. Wird der Anteil des zweiten Polyethers(A2) zu hoch gewählt, tritt ein stärkerer Schrumpf bei Abkühlung des SM auf.

Der Anteil des ersten Polyethers (A1) bezogen auf das Gesamtgewicht der Polyetherzusammensetzung (A) beträgt vorzugsweise 30 Gew.-% oder mehr bis 95 Gew.-% oder weniger, bevorzugt 35 Gew.-% oder mehr bis 90 Gew.-% oder weniger, ganz besonders bevorzugt 40 Gew.-% oder mehr bis 85 Gew.-% oder weniger.

Vorzugsweise werden in der Polyetherzusammensetzung (A) für den ersten Polyether (A1) und den zweiten Polyether (A2)unabhängig voneinander Polyalkylenglycole der allgemeinen Formel (I)

$$R'''\text{-}[(O\text{-}CH_2\text{-}CHR)_n(Z)_k(O\text{-}CH_2\text{-}CHR')_m]\text{-}OR'' \qquad (I)$$

eingesetzt, wobei

R      Wasserstoffatom oder $C_1$-$C_4$-Kohlenwasserstoffrest, bevorzugt Wasserstoffatom oder Methylrest, und

R'      die gleiche Bedeutung wie R, wobei die Reste R und R' gleich oder verschieden sein können, und

R"      Wasserstoffatom, ggf. substituierter oder einfach oder mehrfach ungesättigter $C_1$-$C_{20}$-Kohlenwasserstoffrest, Arylrest, Acylrest -(O)C-$R^x$ wie Formyl-, Acetyl-, Benzoyl-, Acryl-, Methacryl-, Vinylrest, Glycidoxyrest, Polyalkylenglycolrest wie Polyethylenglycolrest oder Polypropylenglycolrest mit 1 bis 50 Wiederholungseinheiten, bevorzugt Wasserstoffatom oder Methylrest, besonders bevorzugt Wasserstoffatom, und

R'''      die gleiche Bedeutung wie R", wobei die Reste R" und R''' gleich oder verschieden sein können, und

$R^x$      Wasserstoffatom, ggf. substituierter oder einfach oder mehrfach ungesättigter $C_1$-$C_{20}$-Kohlenwasserstoffrest oder Arylrest, und

Z      ein Monomer mit mehr als 2 Hydroxylgruppen pro Molekül ist, d.h. eine Verzweigungsstelle, wie beispielsweise 3-wertige Alkohole wie Propantriol oder 4-wertige Alkohole wie 2,2-Bis-(Hydroxymethyl)-1,3-Propandiol, wobei die Hydroxygruppen in den Polyalkylenglycole mit den Alkenglycolmonomeren verethert werden und somit verzweigte Polyalkylenglycole resultieren mit vorzugsweise 3 oder 4 Seitenketten, und

k      0 oder 1 bedeutet, und

n, m      eine ganze Zahl von 0 oder mehr ist, mit der Maßgabe, dass n + m gleich 1 oder mehr ist.

Vorzugsweise sind die Polyalkylenglycole linear oder verzweigt, mit 3 oder 4 Seitenketten pro Molekül.

In einer weiteren Ausführungsform können in der Polyetherzusammensetzung (A) für den ersten Polyether (A1) und den zweiten Polyether (A2)unabhängig voneinander Monoether der oben definierten Polyalkylenglycole eingesetzt werden, vorzugsweise Polyethylenglycolmonoether, Polypropylenglycolmonoether oder Ethylenglycol-Propylenglycol-Copolymer-Monoether, vorzugsweise mit einem Alkyletherrest, besonders bevorzugt einen $C_1$-$C_{10}$-Alkyletherrest, wie Methylether, Ethylether, n-Propylether, n-Butylether oder ähnliche.

Der erste Polyether (A1) und der zweite Polyether (A2)werden vorzugsweise aus der Gruppe bestehend aus Polyethylenglycol, Polypropylenglycol, Polyethylenglycol-Polypropylenglycol-Copolymerisaten und deren Monoether ausgewählt.

Bei den Polyethylenglycol-Polypropylenglycol-Copolymerisaten handelt es sich vorzugsweise um statistische oder BlockCopolymere.

Besonders bevorzugt wird der erste Polyether (A1) aus der Gruppe bestehend aus

- einem Polyethylenglykol oder einem Monoether davon mit einer zahlenmittleren molaren Masse Mn von weniger als 1.000 g/mol, vorzugsweise 800 g/mol oder weniger, besonders bevorzugt 600 g/mol oder weniger, ganz besonders bevorzugt 400 g/mol oder weniger bis 200 g/mol oder mehr,
- einem Polypropylenglykol oder einem Monoether davon mit einer zahlenmittleren molaren Masse Mn von weniger als 2.000 g/mol, vorzugsweise 1.000 g/mol oder weniger, besonders bevorzugt 750 g/mol oder weniger, ganz besonders bevorzugt 600 g/mol oder weniger bis 400 g/mol oder mehr, und
- einem Polyethylenglycol-Polypropylenglycol-Copolymerisat oder einem Monoether davon mit einer zahlenmittleren molaren Masse Mn von weniger als 2.000 g/mol, vorzugsweise 1.000 g/mol oder weniger, besonders bevorzugt 600 g/mol oder weniger, bis 300 g/mol oder mehr,

ausgewählt.

In einer besonders bevorzugten Ausführungsform ist der erste Polyether (A1) ein Polyethylenglykol mit einer zahlenmittleren molaren Masse Mn von weniger als 1.000 g/mol, vorzugsweise 800 g/mol oder weniger, besonders bevorzugt 600 g/mol oder weniger, ganz besonders bevorzugt 400 g/mol oder weniger bis 200 g/mol oder mehr.

Beispiele für Komponente (A1) sind Polyethylenglycole mit einem Mn von ca. 200 g/mol (PEG 200), ca. 400 g/mol (PEG 400) oder ca. 600 g/mol (PEG 600) oder Polypropylenglycole mit einem Mn von ca. 425 g/mol oder ca. 725 g/mol.

Der zweite Polyether (A2) wird vorzugsweise aus der Gruppe bestehend aus

- einem Polyethylenglykol oder einem Monoether davon mit einer zahlenmittleren molaren Masse Mn 1.000 g/mol oder mehr, vorzugsweise 2.000 g/mol oder mehr, besonders bevorzugt 4.000 g/mol oder mehr, ganz besonders bevorzugt 8.000 g/mol oder mehr bis $10 \times 10^6$ g/mol oder weniger und
- einem Polyethylenglycol-Polypropylenglycol-Copolymerisat oder einem Monoether davon mit einer zahlenmittleren molaren Masse Mn von 2.000 g/mol oder mehr, vorzugsweise 4.000 g/mol oder mehr, besonders bevorzugt 8.000 g/mol oder mehr bis $10 \times 10^6$ g/mol oder weniger,

ausgewählt.

In einer besonders bevorzugten Ausführungsform ist der zweite Polyether (A2) ein Polyethylenglykol mit einer zahlenmittleren molaren Masse Mn von 1.000 g/mol oder mehr, vorzugsweise 2.000 g/mol oder mehr, besonders bevorzugt 4.000 g/mol oder mehr, ganz besonders bevorzugt 8.000 g/mol oder mehr bis $10 \times 10^6$ g/mol oder weniger.

Beispiele für Komponente (A2) sind Polyethylenglycole mit einem Mn von ca. 1.000 g/mol (PEG 1000), ca. 4.000 g/mol (PEG 4000), ca. 8.000 g/mol (PEG 8000), ca. 20.000 g/mol (PEG 20000).

Die zahlenmittlere molare Masse Mn kann durch Endgruppenanalyse mittels $^1$H-NMR-Spektroskopie oder nasschemisch durch Bestimmung des Hydroxylwertes ermittelt werden. Die Bestimmung des Hydroxylwertes kann dabei gemäß DIN 53240-2 durch Acetylierung der OH-Gruppen und anschließende Rücktritration der Acetylierungslösung mit KOH erfolgen. Die Acetylierungszeit sollte dabei mindestens 15 min betragen. Aus dem Messwert in mg KOH / g Polyether kann dann die zahlenmittlere molare Masse des Polyethers errechnet werden.

Bei hochmolekularen Polyethern mit sehr niedriger Engruppendichte kann alternativ die zahlenmittlere molare Masse Mn bzw. die gewichtsmittlere molare Masse Mw mittels SEC (size exclusion chromatography) bestimmt werden.

Insbesondere kann das gewichtsmittlere Molekulargewicht Mw und das zahlenmittlere Molekulargewicht Mn mittels Size Exclusion Chromatography (SEC)folgendermaßen bestimmt werden: gegen Polyethylenoxid-Standard 22000, in 100 mmol/l Natriumnitrat mit 10 % Acetonitril, bei 40°C, Flow Rate 1,0 ml/min und Triple-Detektion (Kleinwinkellichtstreu-Detektor, Brechungsindex-Detektor und Viskosimetrie-Detektor von Malvern-Viscotek) auf einem Säulenset Ultrahydrogel 1000, 500, 250 von Waters Corp. USA mit einem Injektionsvolumen von 100 µl.

Komponente (B)

Als partikuläre Rheologieadditive werden vorzugsweise feste, feinteilige anorganische Partikel eingesetzt. Bevorzugt weisen die partikulären Rheologieadditive eine mittlere Partikelgröße < 1000 nm gemessen mittel Photonen-Korrelationsspektroskopie an geeignet verdünnten wässrigen Lösungen, insbesondere mit einer mittleren Primärteilchen-Partikelgröße von 5 bis 100 nm auf, bestimmt mittels optischer Bildauswertung an TEM-Aufnahmen. Dabei können diese Primärteilchen nicht isoliert existieren, sondern Bestandteile größerer Aggregate und Agglomerate sein. Bevorzugt sind die partikulären Rheologieadditive anorganische Feststoffe, insbesondere Metalloxide, wobei Kieselsäuren besonders bevorzugt sind. Vorzugsweise weist das Metalloxid eine spezifische Oberfläche von 0,1 bis 1.000 m²/g (gemessen nach der BET Methode nach DIN 66131 und 66132) auf, besonders bevorzugt von 10 bis 500 m²/g.

Das Metalloxid kann Aggregate (Definition nach DIN 53206) im Bereich von Durchmessern von 100 bis 1.000 nm aufweisen, wobei das Metalloxid aus Aggregaten aufgebaute Agglomerate (Definition nach DIN 53206) aufweist, die in Abhängigkeit von der äußeren Scherbelastung (z.B. bedingt durch die Messbedingungen) Größen von 1 bis 1.000 µm aufweisen kann.

Das Metalloxid ist aus Gründen der technischen Handhabbarkeit vorzugsweise ein Oxid mit kovalentem Bindungsanteil in der Metall-Sauerstoff-Bindung, vorzugsweise ein Oxid im Aggregatszustand Feststoff der Haupt- und Nebengruppenelemente, wie der 3. Hauptgruppe, wie Bor-, Aluminium-, Gallium- oder Indiumoxid, oder der 4. Hauptgruppe wie Siliciumdioxid, Germaniumdioxid, oder Zinnoxid oder -dioxid, Bleioxid oder - dioxid, oder ein Oxid der 4. Nebengruppe, wie Titandioxid, Zirkonoxid, oder Hafniumoxid. Andere Beispiele sind stabile Nickel-, Cobalt-, Eisen-, Mangan-, Chrom- oder Vanadiumoxide.

Besonders bevorzugt sind Aluminium(III)-, Titan(IV)- und Silicium(IV)oxide, wie nasschemisch hergestellte, beispielsweise gefällte Kieselsäuren oder Kieselgele, oder in Prozessen bei erhöhter Temperatur hergestellte Aluminiumoxide, Titandioxide oder Siliciumdioxide, wie zum Beispiel pyrogen hergestellte Aluminiumoxide, Titandioxide oder Siliciumdioxide oder Kieselsäure.

Andere partikuläre Rheologieadditive sind Silikate, Aluminate oder Titanate, oder Aluminiumschichtsilikate, wie Bentonite, wie Montmorillonite, oder Smektite oder Hektorite.

Besonders bevorzugt ist pyrogene Kieselsäure, die in einer Flammenreaktion vorzugsweise aus Siliciumhalogenverbindungen oder Organosiliciumverbindungen, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne zusätzlichem Zusatz von Wasser erfolgen, zum Beispiel im Schritt der Reinigung; bevorzugt ist kein Zusatz von Wasser.

Vorzugsweise weisen die Metalloxide und insbesondere die Kieselsäuren eine fraktale Dimension der Oberfläche von vorzugsweise kleiner oder gleich 2,3 auf, besonders bevorzugt von kleiner oder gleich 2,1, im Besonderen bevorzugt von 1,95 bis 2,05, wobei die fraktale Dimension der Oberfläche $D_s$ definiert ist als:

Partikel-Oberfläche A ist proportional zum Partikel-Radius R hoch $D_s$
Die fraktale Dimension der Oberfläche wurde bestimmt mittels Kleinwinkelröntgenbeugung (SAXS).

Vorzugsweise weisen die Metalloxide und insbesondere die Kieselsäuren eine fraktale Dimension der Masse $D_m$ von vorzugsweise kleiner oder gleich als 2,8, bevorzugt gleich oder größer 2,7, besonders bevorzugt von 2,4 bis 2,6 auf. Die fraktale Dimension der Masse $D_m$ ist hierbei definiert als: Partikel-Masse M ist proportional zum Partikel-Radius R hoch $D_m$. Die fraktale Dimension der Masse wurde bestimmt mittels Kleinwinkelröntgenbeugung (SAXS).

Vorzugsweise handelt es sich bei den partikulären Rheologieadditiven (B) um unpolare, d. h. oberflächenmodifizierte, insbesondere hydrophobierte, vorzugsweise silylierte feinteilige anorganische Partikel. Bevorzugt sind in diesem Zusammenhang hydrophobe Kieselsäuren, besonders bevorzugt hydrophobe pyrogene Kieselsäuren.

Unter hydrophober Kieselsäure sind in diesem Zusammenhang unpolare Kieselsäuren gemeint, die oberflächlich modifiziert, vorzugsweise silyliert sind, wie sie beispielsweise in den Offenlegungsschriften EP 686676 B1, EP 1433749 A1 oder DE 102013226494 A1 beschrieben sind.

Für die erfindungsgemäß eingesetzten Kieselsäuren bedeutet dies, dass die Kieselsäureoberfläche hydrophobiert, d.h. silyliert ist.

Vorzugsweise sind die erfindungsgemäß eingesetzten hydrophoben Kieselsäuren modifiziert, d. h. silyliert mit Organosiliciumverbindungen, wie z.B.

(i) Organosilane bzw. Organosilazane der Formel (II)

$$R^1_d SiY_{4-d} \qquad (II)$$

und/oder deren Teilhydrolysate,
wobei

$R^1$ gleich oder verschieden sein kann und einen einwertigen, gegebenenfalls substituierten, gegebenenfalls einfach oder mehrfach ungesättigten, gegebenenfalls aromatischen Kohlenwasserstoffrest, mit 1 bis 24 Kohlenstoff-Atomen, der durch Sauerstoffatome unterbrochen sein kann, bedeutet,
d gleich 1, 2 oder 3 bedeutet und
Y gleich oder verschieden sein kann und Halogenatom, einwertige Si-N-gebundene Stickstoffreste, an den ein weiterer Silylrest gebunden sein kann, -OR² oder -OC(O)OR² bedeutet, wobei R² gleich Wasserstoffatom oder ein einwertiger, gegebenenfalls substituierter, gegebenenfalls einfach oder mehrfach ungesättigten Kohlenwasserstoffrest, der durch Sauerstoffatome unterbrochen sein kann, bedeutet,
oder

(ii) lineare, verzweigte oder cyclische Organosiloxane aus Einheiten der Formel (III)

$$R^3_e (OR^4)_f SiO_{(4-e-f)/2} \qquad (III)$$

wobei

$R^3$ gleich oder verschieden sein kann und eine der oben für $R^1$ angegebenen Bedeutungen hat,
$R^4$ gleich oder verschieden sein kann und eine für $R^3$ angegebene Bedeutung hat,
e 0, 1, 2 oder 3 ist,

f 0, 1, 2, 3 ist, mit der Maßgabe dass die Summe e+f ≤ 3 ist, und die Anzahl dieser Einheiten pro Molekül mindestens 2 ist, oder

Gemische aus (i) und (ii)

eingesetzt werden.

Bei den Organosiliciumverbindungen, die zur Silylierung der Kieselsäuren eingesetzt werden können, kann es sich beispielsweise um Gemische aus Silanen oder Silazanen der Formel (II) handeln, wobei solche aus Methyl-Chlorsilanen einerseits oder Alkoxysilanen und gegebenenfalls Disilazanen andererseits bevorzugt sind.

Beispiele für $R^1$ in Formel (II) sind vorzugsweise der Methyl-, Octyl-, Phenyl- und Vinylrest, besonders bevorzugt sind der Methylrest und der Phenylrest.

Beispiele für $R^2$ sind vorzugsweise der Methyl-, der Ethyl-, der Propyl und der Octylrest, wobei der Methyl- und der Ethylrest bevorzugt sind.

Bevorzugte Beispiele für Organosilane der Formel (II) sind Alkylchlorsilane, wie Methyltrichlorsilan, Dimethyldichlorsilan, Trimethylchlorsilan, Octylmethyldichlorsilan, Octyltrichlorsilan, Octadecylmethyldichlorsilan und Octadecyltrichlorsilan, Methylmethoxysilane, wie Methyltrimethoxysilan, Dimethyldimethoxysilan und Trimethylmethoxysilan, Methylethoxysilane, wie Methyltriethoxysilan, Dimethyldiethoxysilan und Trimethylethoxysilan, Methylacetoxysilane, wie Methyltriacethoxysilan, Dimethyldiacethoxysilan und Trimethylacethoxysilan, Phenylsilane, wie Phenyltrichlorsilan, Phenylmethyldichlorsilan, Phenyldimethylchlorsilan, Phenyltrimethoxysilan, Phenylmethyldimethoxysilan, Phenyldimethylmethoxysilan, Phenyltriethoxysilan, Phenylmethyldiethoxysilan und Phenyldimethylethoxysilan, Vinylsilane, wie Vinyltrichlorsilan, Vinylmethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan und Vinyldimethylethoxysilan, Disilazane wie Hexamethyldisilazan, Divinyltetramethyldisilazan und Bis(3,3-trifluorpropyl)tetramethyldisilazan, Cyclosilazane wie Octamethylcyclotetrasilazan, und Silanole wie Trimethylsilanol.

Besonders bevorzugt ist Methyltrichlorsilan, Dimethyldichlorsilan und Trimethylchlorsilan oder Hexamethyldisilazan.

Bevorzugte Beispiele für Organosiloxane der Formel (III) sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacethoxysiloxy-, Methyldiacethoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25°C von 2 bis 100 mPa·s.

Die erfindungsgemäß eingesetzten hydrophoben Kieselsäuren weisen eine Silanolgruppendichte von vorzugsweise kleiner 1,8 Silanolgruppen pro $nm^2$, bevorzugt von höchstens 1,0 Silanolgruppen pro $nm^2$ und besonders bevorzugt von höchstens 0,9 Silanolgruppen pro $nm^2$ auf.

Die erfindungsgemäß eingesetzten hydrophoben Kieselsäuren weisen einen Kohlenstoffgehalt von vorzugsweise größer oder gleich 0,4 Gew.% Kohlenstoff , bevorzugt 0,5 Gew.% bis 15 Gew.% Kohlenstoff und besonders bevorzugt 0,75 Gew% bis 10 Gew.% Kohlenstoff auf, wobei das Gewicht auf die hydrophobe Kieselsäure bezogen ist.

Die erfindungsgemäß eingesetzten hydrophoben Kieselsäuren weisen eine Methanolzahl von vorzugsweise mindestens 30, bevorzugt von mindestens 40 und besonders bevorzugt von mindestens 50 auf.

Die erfindungsgemäß eingesetzten hydrophoben Kieselsäuren weisen vorzugsweise eine DBP-Zahl (Dibutylphthalatzahl) von kleiner 250 g/100 g, bevorzugt 150 g/100g bis 250 g/100g auf.

Die erfindungsgemäß eingesetzten hydrophoben Kieselsäuren weisen vorzugsweise eine Stampfdichte gemessen gemäß DIN EN ISO 787-11 von 20 g/l - 500 g/l, bevorzugt von 30 - 200 g/l auf. Die Silanolgruppendichte wird mittels Säure-Base-Titration bestimmt, wie beispielsweise in G.W. Sears, Anal. Chem. 1956, 28, 1981 offenbart. Der Kohlenstoffgehalt kann durch Elementaranalyse bestimmt werden.

Die Methanolzahl ist der prozentuale Anteil von Methanol, welcher der Wasserphase zugesetzt werden muss, um vollständige Benetzung der Kieselsäure zu erreichen. Vollständige Benetzung bedeutet dabei ein vollständiges Einsinken der Kieselsäure in der Wasser-Methanol-Testflüssigkeit zu erreichen.

Die analytischen Methoden zur Charakterisierung der Komponente (B) werden zudem weiter unten im Beispielteil genauer ausgeführt.

Als partikuläres Rheologieadditiv (B) können beliebige Mischungen feinteiliger anorganischer Partikel eingesetzt werden, insbesondere können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlicher Silylierung oder Mischungen aus unmodifizierten und silylierten Kieselsäuren.

Bevorzugt ist bei Mischungen aus silylierten, d. h. hydrophoben, unpolaren Kieselsäuren und unmodifizierten, d. h. hydrophilen, polaren Kieselsäuren, wobei der Anteil der hydrophoben Kieselsäuren an der Gesamtkieselsäuremenge mindestens 50 Gewichtsprozent (Gew.-%), bevorzugt mindestens 80 Gew.-% und besonders bevorzugt mindestens 90 Gew.-% beträgt.

Die unmodifizierten, d. h. hydrophilen, polaren Kieselsäuren weisen vorzugsweise eine spezifische Oberfläche von 0,1 bis 1.000 m$^2$/g (gemessen nach der BET Methode nach DIN 66131 und 66132) auf, besonders bevorzugt von 10 bis 500 m$^2$/g.

Die unmodifizierten, d. h. hydrophilen, polaren Kieselsäuren weisen eine Silanolgruppendichte von vorzugsweise 1,8 Silanolgruppen pro nm$^2$ bis 2,5 Silanolgruppen pro nm$^2$, bevorzugt 1,8 Silanolgruppen pro nm$^2$ bis 2,0 Silanolgruppen pro nm$^2$ auf.

Die unmodifizierten, d. h. hydrophilen, polaren Kieselsäuren weisen eine Methanolzahl von kleiner 30, bevorzugt kleiner 20, besonders bevorzugt kleiner 10 und in einer speziellen Ausführung werden die unmodifizierten, d. h. hydrophilen, polaren Kieselsäuren ohne Zusatz von Methanol vollständig von Wasser benetzt.

Die unmodifizierten, d. h. hydrophilen, polaren Kieselsäuren weisen eine Stampfdichte gemessen gemäß DIN EN ISO 787-11 von 20 g/l - 500 g/l, bevorzugt von 30 - 200 g/l auf und besonders bevorzugt von 30 - 150 g/l auf.

Die erfindungsgemäß eingesetzten unmodifizierten, d. h. hydrophilen, polaren Kieselsäuren weisen vorzugsweise eine DBP-Zahl (Dibutylphthalatzahl) von kleiner 300 g/100 g, bevorzugt 150 g/100 g bis 280 g/100g auf.

### Weitere Zusatzstoffe (C)

Das erfindungsgemäße SM (6a) kann weitere funktionale Zusatzstoffe enthalten, wie beispielsweise

- Farbmittel, wie organische oder anorganische Farbpigmente oder molekular lösliche Farbstoffe;
- industriell übliche Lösungsmittel, wie Wasser, Aceton, Alkohole, aromatische oder aliphatische Kohlenwasserstoffe;
- Stabilisatoren, wie Hitze- oder UV-Stabilisatoren;
- UV-Tracer, wie Fluoreszenz-Farbstoffe, wie z.B. Rhodamine, Fluoresceine oder andere zum Nachweis von SM-Restspuren auf Bauteilen
- Polymere, wie polymere Rheologieadditive oder Verlaufshilfsmittel;
- Füllstoffe, wie nichtverstärkende Füllstoffe, wie zum Beispiel Füllstoffe mit einer BET-Oberfläche von bis zu 50 m$^2$/g, wie Quarz, Diatomenerde, Calciumsilikat, Zirkoniumsilikat, Zeolithe, Aluminiumoxid, Titanoxid, Eisenoxid, Zinkoxid, Bariumsulfat, Calciumcarbonat, Gips, Siliciumnitrid, Siliciumcarbid, Schichtsilikate, wie Glimmer, Montmorillionite, Bornitrid, Glas- und Kunststoffpulver
- Wasserfänger bzw. Trockenmittel, wie beispielsweise Molsiebe oder hydratisierbare Salze wie wasserfreies Na$_2$SO$_4$, mit einer mittleren Partikelgröße kleiner 500 $\mu$m, bevorzugt kleiner 100 $\mu$m, besonders bevorzugt kleiner als 50 $\mu$m, gemessen mittels Laserbeugung.

### Das erfindungsgemäße SM (6a)

Das erfindungsgemäße SM (6a) ist bevorzugt zusammengesetzt aus

65 Gew.-% - 99 Gew.-% (A),
1 Gew.-% - 10 Gew.-% (B) und
0 Gew.-% - 25 Gew.-% (C),

besonders bevorzugt ist das erfindungsgemäße SM (6a) zusammengesetzt aus

92 Gew.-% - 98 Gew.-% (A),
2 Gew.-% - 8 Gew.-% (B) und
0 Gew.-% - 10 Gew.-% (C),

insbesondere bevorzugt ist das erfindungsgemäße SM (6a) zusammengesetzt aus

84 Gew.-% - 96 Gew.-% (A),
4 Gew.-% - 6 Gew.-% (B) und
0 Gew.-% - 10 Gew.-% (C).

Der Einsatz eines zweiten Polyethers (A2) mit einem Festpunkt von 35 °C oder darüber in der Komponente (A) führt dazu, dass das SM eine relativ glatte Oberfläche aufweist. Zusätzlich führt der Einsatz des zweiten Polyethers (A2) dazu, dass das SM bei im abgekühlten Zustand (unter 60 °C) erstarrt und somit eine erhöhte Stabilität im Vergleich zu im Stand der Technik bekannten Gelen aufweist. Bei höheren Temperaturen (über 60 °C) verhilft das partikuläre rheologische Additiv dem SM zu ausreichender Viskoelastizität und Stabilität.

Das erfindungsgemäße SM (6a) ist insbesondere dadurch gekennzeichnet, dass es bei 70 °C strukturviskose und viskoelastische Eigenschaften aufweist.

Strukturviskose Eigenschaften bedeuten, dass die Viskosität $\eta(\dot\gamma)$ des SM (6a) von der Scherrate $\dot\gamma$ abhängig ist und mit zunehmender Scherrate sinkt, wobei dieser Effekt reversibel ist und bei abnehmender Scherrate die Viskosität wieder zunimmt.

Vorzugsweise weist das erfindungsgemäß eingesetzte SM (6a) bei 70 °C eine hohe Viskosität bei niedriger Scherrate auf. Vorzugsweise hat die Viskosität, gemessen bei einer Scherrate von 1 s⁻¹ bei 70 °C einen Wert von 10 Pas oder größer, bevorzugt einen Wert zwischen 15 Pas und 1.000 Pas, besonders bevorzugt zwischen 20 Pas und 500 Pas und in einer speziellen Ausführung zwischen 25 Pas und 250 Pas.

Das erfindungsgemäß eingesetzte SM (6a) weist bei 70 °C eine niedrige Viskosität bei hoher Scherrate auf. Die Viskosität, gemessen bei einer Scherrate von 100 s⁻¹ bei 70 °C hat einen Wert von 10 Pas oder kleiner, bevorzugt einen Wert von 0,1 Pas oder größer bis 10 Pas oder kleiner, besonders bevorzugt von 1 Pas oder größer bis 10 Pas oder weniger und in einer speziellen Ausführung von 1 Pas oder größer bis 7 Pas oder kleiner.

Die Methode zur Bestimmung der Viskosität (= Scherviskosität) wird weiter unten bei den Beispielen exakt beschrieben.

Vorzugsweise weist das erfindungsgemäß eingesetzte SM (6a) bei 70 °C thixotropes Verhalten auf, d. h. beispielsweise, dass der Anstieg der Scherviskosität nach Verringerung der Scherrate von 500 s⁻¹ auf 1 s⁻¹ zeitabhängig ist.

Vorzugsweise erfolgt der Wiederaufbau der Viskosität in Form einer konkaven Kurve, d. h. einer rechtsgekrümmten Kurve.

Vorzugsweise ist der Wiederaufbau der Viskosität nach Verringerung der Scherrate von 500 s⁻¹ auf 1 s⁻¹ nach maximal 10 s abgeschlossen. Dies bedeutet, dass die Viskosität der Probe bei schlagartiger Verringerung der Scherrate von 500 s⁻¹ auf 1 s⁻¹ nach maximal 10 s einen stabilen Plateauwert erreicht hat.

Das erfindungsgemäß eingesetzte SM (6a) ist ferner dadurch gekennzeichnet, dass es bei 70 °C viskoelastisches Verhalten aufweist und insbesondere bevorzugt viskoelastische Festkörpereigenschaften im linear-viskoelastischen (LVE) Bereich aufweist. Dies bedeutet, dass im LVE-Bereich, definiert gemäß T. Mezger, G., The Rheology Handbook, 2. ed., Vincentz Network GmbH & Co. KG; Germany, 2006, 147ff., der Verlustfaktor $\tan\delta = G''/G'$ einen Wert kleiner 1, bevorzugt kleiner 0,75 und besonders bevorzugt kleiner 0,5 hat.

Das erfindungsgemäß eingesetzte SM (6a) ist ferner dadurch gekennzeichnet, dass es sich bei 70 °C bevorzugt um ein stabiles physikalisches Gel handelt. Dies bedeutet, dass der Plateau-Wert des Speichermoduls G' im LVE-Bereich bei 70 °C einen Wert größer 100 Pa hat und bevorzugt im Bereich von 100 bis 5.000 Pa und besonders bevorzugt im Bereich von 100 bis 2.500 Pa liegt.

Ferner ist das Gel dadurch charakterisiert, dass die kritische Fließspannung $\tau_{krit}$, das heißt, die Spannung $\tau$ bei der G' = G'' ist, bevorzugt einen Wert von größer 1 Pa, bevorzugt größer 5 Pa und besonders bevorzugt größer 25 Pa hat. Das Speichermodul G' lässt sich über rheologische Messungen mithilfe eines Rheometers bestimmen.

Die erfindungsgemäß eingesetzten SM (6a) weisen im Temperaturbereich von 20 °C bis 60 °C einen Phasenübergang auf. D.h. die erfindungsgemäß eingesetzten SM (6a) weisen beim Abkühlen im Temperaturbereich von 20 °C bis 60 °C einen Übergang von einer Flüssigkeit mit viskoelastischem Verhalten zu einem Festkörper auf. Die diesem Phasenübergang zugeordnete Verfestigungstemperatur Ts wurde aus einem Temperatursweep-Experiment unter dynamischer Belastung der Probe mit konstanter Deformation und Frequenz unter Abkühlung im Temperaturbereich von 70 °C bis 20 °C erhalten. Dazu wurden die Messwerte des Betrags der komplexen Viskosität $|\eta^*|(T)$ mit Hilfe der Boltzmann-Sigmoidalfunktion analysiert. Die Verfestigungstemperatur Ts des SM (6a) liegt im Bereich von 20 °C oder mehr bis 60 °C oder weniger, bevorzugt im Bereich von 25 °C oder mehr bis 50 °C oder weniger. Vorzugsweise erfolgt die Verfestigung in einem engen Temperaturbereich, d.h. die Verfestigungskurve $|\eta^*|(T)$ ist steil. Dies bedeutet, dass der Steigungsparameter dT der Boltzmann-Sigmoidalfunktion einen Wert von 0,1 bis 1, bevorzugt 0,25 bis 0,75 aufweist.

Das erfindungsgemäß eingesetzte SM (6a) ist ferner dadurch gekennzeichnet, dass Silicone auf der Oberfläche der SM (6a) spreiten können. Dies bedeutet, dass der Kontaktwinkel eines niedermolekularen Siliconöls (z.B. AK 100 der Wacker Chemie AG) einen Wert kleiner 90°, bevorzugt kleiner 60° und besonders bevorzugt das SM spontan ohne Ausbildung eines messbaren Kontaktwinkels benetzt.

Das erfindungsgemäß eingesetzte SM (6a) ist ferner dadurch gekennzeichnet, dass es sich bei kurzzeitiger Bestrahlung mit elektromagnetischer Strahlung, wie z. B. mit UV-Licht im Rahmen der Strahlungsvernetzung des sbM (6b), nicht verändert, d.h. keine Abbaureaktionen, Polymerisationen oder Verlust an Stabilität aufweist.

Das erfindungsgemäß eingesetzte SM (6a) ist vorzugsweise dadurch gekennzeichnet, dass es sich nach Aushärten des sbM (6b) leicht vom Formkörper (8) mechanisch oder durch Lösen in einem Lösungsmittel entfernen lässt. Dies kann mechanisch z.B. mittels Druckluft, Abschleudern z. B. mittels Zentrifuge, Bürsten, Schabern oder Ähnlichem erfolgen. Ferner kann das Entfernen durch Lösen in einem geeigneten Lösungsmittel erfolgen.

Bevorzugt sind dabei umweltfreundliche und für den Endanwender unbedenkliche Lösungsmittel, vorzugsweise Wasser. Vorzugsweise weist das erfindungsgemäß eingesetzte SM (6a) und insbesondere die eingesetzten Polyether eine gute Löslichkeit in Wasser auf. Dies bedeutet, dass sich bei 20 °C mindestens 5 g SM in 100 g Wasser lösen, bevorzugt mindestens 50 g SM in 100 g Wasser lösen und besonders bevorzugt mindestens 100 g SM in 100 g Wasser lösen.

Dies bedeutet ferner, dass sich die eingesetzten Polyether zu mindestens 5 g in 100 g Wasser lösen, bevorzugt zu mindestens 50 g in 100 g Wasser lösen und besonders bevorzugt zu mindestens 100 g SM in 100 g Wasser lösen, jeweils bei 20 °C. Vorzugsweise wird das Lösungsmittel dazu erwärmt und/oder insbesondere dem Wasser geeignete Tenside wie anionische, kationische oder neutrale Tenside zugesetzt. Gegebenenfalls kann das Waschen maschinell erfolgen, beispielsweise in einer geeigneten Spülmaschine.

Vorzugsweise wird das erfindungsgemäß eingesetzte SM (6a) nach dem Entfernen vom Formkörper (8) recycelt. Dazu hat es sich als vorteilhaft erwiesen, wenn das erfindungsgemäß eingesetzte SM (6a) eine geringe Absorptionskapazität an flüchtigen Bestandteilen des sbM (6b) wie beispielsweise niedermolekulare Siloxane im Fall von Silicon-Elastomeren als sbM (6b) hat.

Bei der Herstellung der SM-Dispersionen, die partikuläre Rheologieadditive (B) enthalten, werden die partikulären Rheologieadditive (B) in die Polyetherzusammensetzung (A) eingemischt.

Die partikulären Rheologieadditive (B) können zur Herstellung der SM-Dispersionen bei Temperaturen oberhalb des Festpunktes der Komponente (A2) und bevorzugt oberhalb von 70 °C in die flüssige Polyetherzusammensetzung (A) zugegeben werden und durch Benetzung verteilt, oder durch Schütteln, wie mit einem Taumelmischer, oder einem High Speed Mixer, oder durch Rühren vermischt werden. Bei geringen Partikelkonzentrationen unter 10 Gew.% reicht im Allgemeinen einfaches Rühren zur Einarbeitung der Partikel (B) in die Flüssigkeit (A). Bevorzugt erfolgt das Einarbeiten und Dispergieren der Partikel (B) in die flüssige Polyetherzusammensetzung (A) bei sehr hohem Schergefälle. Hierfür sind vorzugsweise schnelllaufende Rührer, schnelllaufende Dissolver, z.B. mit Umlaufgeschwindigkeiten von 1-50 m/s, schnelllaufende Rotor-Stator Systeme, Sonolatoren, Scherspalte, Düsen, Kugelmühlen und andere geeignet.

Dies kann in diskontinuierlichen und in kontinuierlichen Verfahren erfolgen, bevorzugt sind kontinuierliche Verfahren. Im Besonderen geeignet sind Systeme, die zunächst mit effektiven Rührorganen die Benetzung und Einarbeitung der partikulären Rheologieadditive (B) in die Polyetherzusammensetzung (A) erzielen, z.B. in einem geschlossenen Behältnis oder Kessel, und in einem zweiten Schritt die partikulären Rheologieadditive (B) bei sehr hohem Schergefälle dispergieren. Dies kann durch ein Dispergiersystem in dem ersten Behältnis geschehen, oder durch Umpumpen in externe Rohrleitungen, die ein Dispergierorgan enthält aus dem Behältnis unter bevorzugt geschlossener Rückführung in das Behältnis. Durch eine teilweise Rückführung, und teilweise kontinuierliche Entnahme kann dieser Prozess bevorzugt kontinuierlich gestaltet werden.

Insbesondere geeignet ist zur Dispergierung der partikulären Rheologieadditive (B) in der SM-Dispersion der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen, oder in Durchflusssysteme, die, gegebenenfalls durch eine Rohrleitung oder Rohrwand abgetrennter Systeme, einen oder mehrere Ultraschallgeber enthalten.

Ultraschalldispergierung kann kontinuierlich oder diskontinuierlich erfolgen.

Das Dispergieren kann in üblichen, zur Herstellung von Emulsionen bzw. Dispersionen geeigneten Mischgeräten, die einen ausreichend hohe Eintrag von Scherenergie leisten, wie beispielsweise schnelllaufende Stator-Rotor-Rührgeräte, wie z. B. nach Prof. P. Willems, bekannt unter dem registrierten Warenzeichen "Ultra-Turrax", oder anderen Stator-Rotor-Systemen, bekannt unter dem registrierten Warenzeichen wie Kady, Unimix, Koruma, Cavitron, Sonotron, Netzsch oder Ystral erfolgen. Andere Verfahren sind Ultraschallverfahren wie US Finger/Geber, oder US Durchflusszellen, oder US Systeme oder analog wie von Sonorex /Bandelin angeboten, oder Kugelmühlen, wie z.B. Dyno-Mill von WAB, CH. Weitere Verfahren sind schnelllaufende Rührer, wie Flügelrührer oder Balkenrührer, Dissolver wie Scheibendissolver z.B. der Firma Getzmann, oder Mischsysteme wie Planetendissolver, Balkendissolver oder andere kombinierte Aggregate aus Dissolver- und Rührersystemen. Andere geeignete Systeme sind Extruder oder Kneter.

Vorzugsweise erfolgt das Einarbeiten und Dispergieren der partikulären Rheologieadditive (B) unter Vakuum oder beinhaltet einen Evakuierungsschritt.

Vorzugsweise erfolgt das Einarbeiten und Dispergieren der partikulären Rheologieadditive (B) bei erhöhter Temperatur in einem Temperaturbereich von 30 °C bis 200 °C, bevorzugt 50 °C bis 150 °C und besonders bevorzugt 70 °C bis 100 °C. Vorzugsweise kann der Temperaturanstieg durch externes Heizen bzw. Kühlen gesteuert werden.

Selbstverständlich kann die SM-Dispersion auch auf andere Weise hergestellt werden.

Vorzugsweise werden die erfindungsgemäß eingesetzten SM (6a) in geeignete Dosierbehälter (4a) abgefüllt, wie Kartuschen, Schlauchbeutel oder ähnliche. Bevorzugt werden die Dosierbehälter (4a) anschließend durch Einschweißen z.B. in metallisierte Folie, vor Zutritt von Luftfeuchte geschützt.

Vorzugsweise werden die erfindungsgemäß eingesetzten SM (6a) vor und/oder während der Abfüllung entgast, beispielsweise durch Anlegen eines geeigneten Vakuums oder mittels Ultraschall.

Vorzugsweise werden die erfindungsgemäß eingesetzten SM (6a) vor der Abfüllung getrocknet, beispielsweise durch Anlegen eines geeigneten Vakuums bei erhöhter Temperatur.

Der Gehalt an freiem Wasser im eingesetzten SM (6a), d. h. Wasser, das nicht an Wasserfänger oder Trockenmittel gebunden wurde, beträgt kleiner 10 Gew.-%, bevorzugt kleiner 5 Gew.-%, besonders bevorzugt kleiner 1 Gew.-% bezogen auf die Gesamtmasse des SM. Der Gehalt an freiem Wasser kann beispielsweise mittels Karl-Fischer-Titration oder NMR-Spektroskopie quantitativ bestimmt werden.

Vorzugsweise erfolgt Abfüllung der erfindungsgemäß eingesetzten SM (6a) bei erhöhter Temperatur in einem Temperaturbereich von 30 °C bis 200 °C, bevorzugt 50 °C bis 150 °C und besonders bevorzugt 70 °C bis 100 °C.

Vorzugsweise werden die erfindungsgemäß eingesetzten SM (6a) aus den Dosierbehältern durch mechanischen Druck bzw. mittels Luftdruck oder Vakuum ausgebracht.

Vorzugsweise erfolgt die Ausbringung der erfindungsgemäß eingesetzten SM (6a) aus den Dosierbehältern bei erhöhter Temperatur in einem Temperaturbereich von 30 °C bis 100 °C, bevorzugt 40 °C bis 100 °C und besonders bevorzugt 50 °C bis 100 °C.

## Beispiele

Die folgenden Beispiele dienen der Erläuterung der vorliegenden Erfindung ohne diese zu beschränken.

Alle Prozentangaben beziehen sich auf das Gewicht. Falls nicht anders angegeben, werden alle Manipulationen bei Raumtemperatur von 25°C und unter Normaldruck (1.013 bar) ausgeführt. Bei den Apparaten handelt es sich um handelsübliche Laborgeräte wie sie von zahlreichen Geräteherstellern käuflich angeboten werden.

### Analytische Methoden zur Charakterisierung der Kieselsäuren (Komponente B)

Methanolzahl

Test der Benetzbarkeit mit Wasser-Methanol Gemischen (Volumen% MeOH in Wasser): Einschütteln eines gleichen Volumens der Kieselsäure mit gleichem Volumen an Wasser-Methanol Gemisch

- Start mit 0% Methanol
- bei Nicht-Benetzung schwimmt zumindest ein Teil der Kieselsäure auf: Es ist ein Gemisch mit um 5 Vol% höherem MeOH-Anteil zu verwenden
- bei Benetzung sinkt das gesamte Volumen der Kieselsäure ein: Anteil MeOH (Vol%) in Wasser gibt die Methanolzahl.

Kohlenstoffgehalt (%C)

Die Elementaranalyse auf Kohlenstoff erfolgte nach DIN ISO 10694 unter Verwendung eines CS-530 Elementaranalysators der Firma Eltra GmbH (D-41469 Neuss).

Rest-Silanolgehalt

Die Bestimmung des Rest-Silanolgehalts erfolgte analog G. W. Sears et al. Analytical Chemistry 1956, 28, 1981ff mittels Säure-Base-Titration der in einer 1:1-Mischung aus Wasser und Methanol suspendierten Kieselsäure. Die Titration erfolgte im Bereich oberhalb des isoelektrischen Punktes und unterhalb des pH-Bereichs der Auflösung der Kieselsäure. Der Rest-Silanolgehalt in % kann demnach nach folgender Formel errechnet werden:

```
SiOH = SiOH(silyl)/SiOH(phil) 100%
```

mit

SiOH(phil): Titrationsvolumen aus der Titration der unbehandelten Kieselsaure
SiOH(silyl): Titrationsvolumen aus der Titration der silylierten Kieselsaure

DBP-Zahl

Die Dibutylphthalatabsorption wird gemessen mit einem Gerät RHEOCORD 90 der Fa. Haake, Karlsruhe. Hierzu werden 12 g des Siliciumdioxidpulvers auf 0,001 g genau in eine Knetkammer eingefüllt, diese mit einem Deckel verschlossen und Dibutylphthalat über ein Loch im Deckel mit einer vorgegebenen Dosierrate von 0,0667 ml/s eindosiert. Der Kneter wird mit einer Motordrehzahl von 125 Umdrehungen pro Minute betrieben. Nach Erreichen des Drehmomentmaximums werden der Kneter und die DBP-Dosierung automatisch abgeschaltet. Aus der verbrauchten Menge DBP und der eingewogenen Menge der Partikel wird die DBP-Absorption berechnet nach: DBP-Zahl (g/100 g) = (Verbrauch DBP in g/Einwaage Pulver in g) $\times$ 100.

**Rheologische Messungen**

Alle Messungen wurden auf einem Rheometer MCR 302 mit Luftlagerung der Firma Anton Paar bei 70 °C, sofern nicht anders genannt, durchgeführt. Es wurde mit Platte-Platte-Geometrie (Durchmesser 25 mm) bei einer Spaltweite von 300 μm gemessen. Überschüssiges Probenmaterial wurde nach Anfahren des Messspaltes mittels Spatel entfernt (s. g. trimmen). Vor dem Start des eigentlichen Messprofils wurde die Probe einer definierten Vorscherung unterworfen um die rheologische Historie aus Probenauftrag und Anfahren der Messposition zu beseitigen. Die Vorscherung umfasste eine Scherphase von 60 s bei Scherrate von 100 s-1 gefolgt von einer Ruhephase von 300 s.
Die Scherviskositäten wurden aus einem sogenannten Stufenprofil ermittelt, bei dem die Probe jeweils für 120 s bei einer konstanten Scherrate von 1 s$^{-1}$, 10 s$^{-1}$ und 100 s$^{-1}$ geschert wurde. die Messpunktsdauer betrug dabei 12 s (1 s$^{-1}$) bzw. 10 s (10 s$^{-1}$, 100 s$^{-1}$) und als Scherviskosität wurde der Mittelwert der letzten 4 Datenpunkte eines Blocks herangezogen.
Der Plateauwert des Speichermodul G', der Verlustfaktor tan δ und die kritische Schubspannung $\tau_{krit}$ wurden aus einem dynamischen Deformationsversuch erhalten, bei dem die Probe bei einer konstanten Kreisfrequenz von 10 rad/s mit zunehmender Deformationsamplitude unter Deformationsvorgabe im Deformationsbereich von 0,01 bis 100 belastet wurde. Messpunktsdauer war 30 s mit 4 Messpunkten pro Dekade. Der Plateau-Wert des Speichermoduls G' ist dabei der Mittelwert der Datenpunkte 2 bis 7 mit der Maßgabe, dass diese im linear-viskoelastischen Bereich liegen, d.h. keine Abhängigkeit von der Deformation bzw. Schubspannung aufweisen.
Als Wert für den Verlustfaktor tan δ wurde der Wert beim 4. Messpunkt gewählt.
Die Verfestigungstemperatur Ts der SM wurde mittels Temperatursweep unter dynamischer Scherbelastung ermittelt. Dabei wurde die Probe schrittweise mit einer Abkühlrate von 1,5 K/min von 70 °C auf 20 °C abgekühlt. Dabei wurde die Probe mit einer konstanten Deformation von 0,1% bei einer konstanten Frequenz von 10 Hz belastet. Die Messpunktsdauer betrug 0,067 min. Man erhält den Speichermodul G'(T), den Verlustmodul G"(T), bzw. die komplexe Viskosität |η*|(T), jeweils als Funktion der Temperatur T. Eine Auftragung |η*|(T) gegen T ergibt eine sigmaoide Kurve. Mit Hilfe der Boltzmann Sigmoidalfunktion wurde aus der Kurve die Verfestigungstemperatur $T_s$ und die Steilheit der Kurve wie folgt ermittelt:
Die Boltzmann Sigmoidalfunktion hat hier die Form

$$|\eta|^*(\mathrm{T}) = \frac{|\eta|^*_{max} - |\eta|^*_{min}}{1 + e^{(T-T_0)/dT}} - |\eta|^*_{min} \cdot$$

|η|*(T) ist dabei der Betrag der komplexen Viskosität als Funktion der Temperatur, |η|*$_{max}$ der Plateauwert des Betrags der komplexen Viskosität bei niedriger Temperatur, |η|*$_{min}$ der Plateauwert des Betrags der komplexen Viskosität bei hoher Temperatur, T ist die Temperatur in °C, $T_0$ ist der Wendepunkt und wird hier als Verfestigungstemperatur Ts in °C definiert und dT ist der Steigungsparameter, der die Steilheit der Kurve beschreibt. Die Funktion wurde dabei mit Hilfe der Software ORIGIN 2016G an die Messwerte angefittet. Als Iterationsalgorithmus wurde der softwareseitig implementierte Levenberg Marquardt-Algorithmus eingesetzt. Der Fit-Prozess wurde automatisch beendet, sobald der Fit konvergierte und der Chi-Quadrat-Wert von 1x10$^{-9}$ erreicht wurde. Die Plateauwerte |η|*$_{max}$ und |η|*$_{min}$ wurden aus den Messwerten durch Mittelung der ersten 10 bzw. letzten 10 Messpunkte ermittelt und im Rahmen der Kurvenanpassung fixiert. Die Parameter $T_0$ und dT wurden für die Iteration freigegeben.
**3D-Drucker:** Für die nachfolgend beschriebenen Beispiele des erfindungsgemäßen Verfahrens wurde als generative Fertigungsanlage ein "NEO-3D-Drucker" der Firma "German RepRap GmbH" verwendet, welcher für die Versuche umgebaut und angepasst wurde. Die ursprünglich im "NEO-3D-Drucker" montierte Thermoplast-Filament-Dosiereinheit wurde durch eine Jetting-Düse der Firma "Vermes Microdispensing GmbH, Otterfing" ersetzt, um höherviskose bis standfest-pastöse Massen wie die erfindungsgemäß eingesetzten SM tröpfchenweise abscheiden zu können.
Weil der "NEO"-Ducker für die Installation von Jetting-Düsen nicht standardmäßig ausgerüstet war, wurde er modifiziert.
Die Vermes-Jetting-Düse wurde so in die Drucker-Steuerung eingebunden, dass das Start-Stop-Signal (Triggersignal) der Vermes-Jetting-Düse von der GCode-Steuerung des Druckers betätigt wurde. Dazu wurde in der GCode-Steuerung ein spezielles Signal hinterlegt. Die GCode-Steuerung des Computers schaltete damit lediglich die Jetting-Düse ein und aus (Start- und Stop der Dosierung). Für die Signalübertragung des Start-Stop-Signals wurde das Heizkabel der ursprünglich installierten Filament-Heizdüse des "NEO"-Druckers getrennt und mit der Vermes-Düse verbunden. Die übrigen Dosierparameter (DosierFrequenz, Rising, Falling usw.) der Vermes-Jetting-Düse wurden mittels der MDC 3200+ Microdispensing Control Unit eingestellt.
Die Steuerung des 3D-Druckers erfolgte mittels eines Computers. Die Software-Steuerung und Steuersignal-Anbindung des 3D-Druckers (Software: "Repitier-Host") wurde dahingehend modifiziert, dass damit sowohl die Bewegung der Dosierdüse in den drei Raumrichtungen gesteuert werden konnte als auch das Signal zur Tropfenabscheidung. Die maximale Verfahrgeschwindigkeit des "NEO" 3D Druckers beträgt 0,3 m/s.

**Dosiersystem:** Als Dosiersystem für die verwendeten SM-Massen bzw. das strahlungsvernetzende Silicone-Elastomer-Strukturmaterial diente das Microdispensing-Dosiersystem "MDV 3200 A" der Firma "Vermes Microdispensing GmbH", bestehend aus einem Komplettsystem mit folgenden Komponenten: a) MDV 3200 A - Düseneinheit mit einem Anschluss für Luer-Lock Kartuschen, welche an der Kartuschen-Oberseite mit 3-8 bar Druckluft (Schlauch mit Adapter) beaufschlagt wurden, b) Vermes Begleit-Düsenheizungs-System MDH-230tfl links, c) Kartuschenheizung MCH30-230 mit MCH Druckluftentlastung zur Fixierung einer Hotmelt Kartusche, MHC 3002 Microdispensing Heizung Controller und Heizungskabel MCH-230tg d) MDC 3200+ MicroDispensing Control Unit, die wiederum mit der PC-Steuerung verbunden war sowie über bewegliche Kabel mit der Düse, ermöglichte die Einstellung der Jetting Dosier-Parameter (Rising, Falling, Opentime, Needlelift, Delay, No Puls, Heater, Düse, Abstand, Voxeldurchmesser, Luft-Vordruck an der Kartusche). Es stehen Düsen mit Durchmessern von 50, 100, 150 und 200 $\mu$m zur Verfügung. Damit können feinste SM-Tröpfchen (6a) im Nanoliter-Bereich auf jeder beliebigen xyz-Position der Basisplatte bzw. des vernetzten sbM (6b) punktgenau platziert werden. Sofern bei den einzelnen Beispielen nichts anderes angegeben ist, war in dem Vermes-Ventil als Standard-Düseneinsatz eine 200 pm-Düse eingebaut (Düseneinsatz N11-200).

Als Vorratsbehälter (4a) für die SM-Masse (6b) dienten senkrecht stehende 30 ml Luer-Lock Kartuschen, die flüssigkeitsdicht an die Dispensing-Düse aufgeschraubt und mit Druckluft beaufschlagt wurden.

Die Steuerung des modifizierten "NEO"-3D-Druckers und des "Vermes"-Dosiersystems erfolgte mit einem PC und einer Open-Source-Software "Simplify 3D".

**Strahlungsquelle:**

**UV-Kammer mit Osram-UV-Lampe**

Für Offline-UV-Bestrahlung zur Vernetzung der sbM (6b) von Bauteilen wurde eine UV-Bestrahlungskammer verwendet, die innen verspiegelt war und folgende Außen-Abmessungen hatte:

| | |
|---|---|
| Länge | 50 cm |
| Höhe | 19 cm |
| Breite | 33 cm |

Der Abstand zwischen der UV-Leuchtstofflampe und dem Substrat betrug 15 cm.

Strahlungsquelle: UV-Lampe mit 36 Watt elektrischer Leistung, Typ "Osram Puritec HNS L 36 W 2G11" mit einer Wellenlänge von 254 nm,

Osram GmbH, Steinerne Furt 62, 86167 Augsburg.

**Konditionierung der SM-Massen bzw. der sbM-Massen:** Die verwendeten sbM-Massen wurden sämtlich vor der Verarbeitung in einem 3D-Drucker entflüchtigt, indem 100 g der Masse in einer offenen PE-Dose in einem Exsikkator 3 h bei einem Vakuum von 10 mbar und Raumtemperatur (= 25 °C) gelagert wurden. Anschließend wurde die Masse in eine 30 ml-Kartusche mit Bajonettverschluss luftfrei abgefüllt und mit einem passenden Auspress-Stempel (Kunststoffkolben) verschlossen. Die Luer-Lock Kartusche wurde dann in die vertikale Kartuschenhalterung des Vermes-Dosierventils flüssigkeitsdicht mit der Luer-Lock-Verschraubung nach unten eingeschraubt und Druck-Stempel an der Kartuschenoberseite mit 3-8 bar Druckluft beaufschlagt; der in der Kartusche befindliche Auspress-Stempel verhindert, dass die Druckluft in die zuvor blasenfrei evakuierte Masse gelangen kann.

Die SM-Massen wurden bei 70 °C in einem Stickstoff-gespülten Trockenschrank über Nacht aufgeschmolzen, in Kartuschen abgefüllte und heiß 5 min bei 2000 rpm luftfrei zentrifugiert Die Luer-Lock Kartusche wurde dann in die vertikale Kartuschenheizung des Vermes-Dosierventils flüssigkeitsdicht mit der Luer-Lock-Verschraubung nach unten eingeschraubt und und Druck-Stempel an der Kartuschenoberseite mit 3-8 bar Druckluft beaufschlagt; der in der Kartusche befindliche Auspress-Stempel verhindert, dass die Druckluft in die zuvor blasenfrei zentrifugierte Masse gelangen kann. Die Kartuschen wurden vor Start des Druckvorgangs für mindestens 30 min auf die Zieltemperatur temperiert.

**Beispiel 1 (B1):**

In einem Labormischer der Fa. PC Laborsystem GmbH mit Balkendissolver (Durchmesser Dissolverscheibe 60 mm) wurden eine Mischung von 237,5 g eines Polyethylenglycols mit einer mittleren Molmasse Mn von 600 g/mol (PEG 600, Festpunkt: 17 °C) und 237,5 g eines Polyethylenglycols mit einer mittleren Molmasse Mn von 8.000 g/mol (PEG 8000, Festpunkt: 55 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 2 (B2):**

In einem Labormischer der Fa. PC Laborsystem GmbH mit Balkendissolver (Durchmesser Dissolverscheibe 60 mm) wurden eine Mischung von 356,2 g eines Polyethylenglycols mit einer mittleren Molmasse Mn von 600 g/mol (PEG 600, Festpunkt: 17 °C) und 118,8 g eines Polyethylenglycols mit einer mittleren Molmasse Mn von 8.000 g/mol (PEG 8000, Festpunkt: 55 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 3 (B3):**

In einem Labormischer der Fa. PC Laborsystem GmbH mit Balkendissolver (Durchmesser Dissolverscheibe 60 mm) wurden eine Mischung von 356,2 g eines Polyethylenglycols mit einer mittleren Molmasse Mn von 600 g/mol (PEG 600, Festpunkt: 17 °C) und 118,8 g eines Polyethylenglycols mit einer mittleren Molmasse Mn von 20.000 g/mol (PEG 20000, Festpunkt: 57 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 4 (B4):**

In einem Labormischer der Fa. PC Laborsystem GmbH mit Balkendissolver (Durchmesser Dissolverscheibe 60 mm) wurden eine Mischung von 234,5 g eines Polyethylenglycols mit einer mittleren Molmasse Mn von 600 g/mol (PEG 600, Festpunkt: 17 °C) und 234,5 g eines Polyethylenglycols mit einer mittleren Molmasse Mn von 20.000 g/mol (PEG 20000, Festpunkt: 57 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 5 (B5):**

In einem Labormischer der Fa. PC Laborsystem GmbH mit Balkendissolver (Durchmesser Dissolverscheibe 60 mm) wurden eine Mischung von 234,5 g eines Polyethylenglycols mit einer mittleren Molmasse Mn von 600 g/mol (PEG 600, Festpunkt: 17 °C) und 234,5 g eines Polyethylenglycols mit einer mittleren Molmasse Mn von 4.000 g/mol (PEG 4000, Festpunkt: 53 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 6 (B6):**

In einem Labormischer der Fa. PC Laborsystem GmbH mit Balkendissolver (Durchmesser Dissolverscheibe 60 mm) wurden eine Mischung von 350,7 g eines Polyethylenglycols mit einer mittleren Molmasse Mn von 600 g/mol (PEG 600, Festpunkt: 17 °C) und 117,3 g eines Polyethylenglycols mit einer mittleren Molmasse Mn von 20.000 g/mol (PEG 20000, Festpunkt: 57 °C) vorgelegt und bei einer Temperatur von 70 °C 20,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 7 (B7):**

In einem Labormischer der Fa. PC Laborsystem GmbH mit Balkendissolver (Durchmesser Dissolverscheibe 60 mm) wurden eine Mischung von 344,0 g eines Polyethylenglycols mit einer mittleren Molmasse Mn von 600 g/mol (PEG 600, Festpunkt: 17 °C) und 114,5 g eines Polyethylenglycols mit einer mittleren Molmasse Mn von 20.000 g/mol (PEG 20000, Festpunkt: 57 °C) vorgelegt und bei einer Temperatur von 70 °C 30,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 8 (B8):**

In einem Labormischer der Fa. PC Laborsystem GmbH mit Balkendissolver (Durchmesser Dissolverscheibe 60 mm) wurden eine Mischung von 348,0 g eines Polyethylenglycols mit einer mittleren Molmasse Mn von 400 g/mol (PEG 400, Festpunkt: 4 °C) und 116,0 g eines Polyethylenglycols mit einer mittleren Molmasse Mn von 20.000 g/mol (PEG 20000, Festpunkt: 57 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 9 (B9):**

In einem Labormischer der Fa. PC Laborsystem GmbH mit Balkendissolver (Durchmesser Dissolverscheibe 60 mm) wurden eine Mischung von 348,0 g eines Polypropylenglycols mit einer mittleren Molmasse Mn von 400 g/mol (PPG 400, Festpunkt: -41°C) und 116,0 g eines Polyethylenglycols mit einer mittleren Molmasse Mn von 20.000 g/mol (PEG 20000, Festpunkt: 57 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 10 (B10; nicht erfindungsgemäß):**

In einem Labormischer der Fa. PC Laborsystem GmbH mit Balkendissolver (Durchmesser Dissolverscheibe 60 mm) wurden eine Mischung von 118,5 g eines Polyethylenglycols mit einer mittleren Molmasse Mn von 600 g/mol (PEG 600, Festpunkt: 17 °C) und 356,2 g eines Polyethylenglycols mit einer mittleren Molmasse Mn von 8.000 g/mol (PEG 8000, Festpunkt: 55 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 11 (B11; nicht erfindungsgemäß):**

In einem Labormischer der Fa. PC Laborsystem GmbH mit Balkendissolver (Durchmesser Dissolverscheibe 60 mm) wurden 475,0 g eines Polyethylenglycols mit einer mittleren Molmasse Mn von 8.000 g/mol (PEG 8000, Festpunkt: 55 °C) vorgelegt und bei einer Temperatur von 70 °C 25,0 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 1 h zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Tabelle 1**

| | HDK® H18 |
|---|---|
| Methanolzahl | 74 |
| % Kohlenstoff | 4,8 |
| DBP-Zahl (g / 100 g) | 165 |
| Rest-SiOH ($nm^{-1}$) | 0,36 |

**Tabelle 2**

| | Beispiel 1 (B1) | Beispiel 2 (B2) | Beispiel 3 (B3) | Beispiel 4 (B4) | Beispiel 5 (B5) | Beispiel 6 (B6) | Beispiel 7 (B7) | Beispiel 8 (B8) | Beispiel 9 (B9) | Beispiel 10 (B10) | Beispiel 11 (B11) |
|---|---|---|---|---|---|---|---|---|---|---|---|
| Anteil pRA (%) | 5 | 5 | 5 | 5 | 5 | 4 | 6 | 5 | 5 | 5 | 5 |
| Viskosität 1 $s^{-1}$ (Pas) | 78,2 | 61,8 | 65,1 | 110,3 | 71,1 | 48,2 | 164,3 | 130,2 | 38,1 | 127 | 152,3 |
| Viskosität 100$s^{-1}$ (Pa·s) | 2 | 1,2 | 1,9 | 5,8 | 1,3 | 1,6 | 3,4 | 2,8 | 1,1 | 3,5 | 4,4 |
| $T_s$(°C) | 37,0 | 26,0 | 41,3 | 46,5 | 31,4 | 41,4 | 40,0 | 41,1 | 43,9 | 42,8 | 48,0 |
| dT | 0,467 | 0,690 | 0,630 | 0,360 | 0,544 | 0,675 | 0,613 | 0,505 | 0,515 | 0,267 | 0,453 |
| G'(Pa) | 811,3 | 814,4 | 645,2 | 925 | 802,7 | 379,1 | 2001,6 | 1295,7 | 590,2 | 1177,9 | 855,1 |
| tan d | 0,117 | 0,101 | 0,128 | 0,25 | 0,092 | 0,173 | 0,094 | 0,07 | 0,145 | 0,13 | 0,221 |
| $\tau_{\kappa\rho\iota\tau}$ ($\Pi\alpha$) | 69,6 | 48,5 | 58,9 | 131,1 | 57,2 | 63,2 | 164 | 127 | 71,6 | 110,1 | 169,6 |

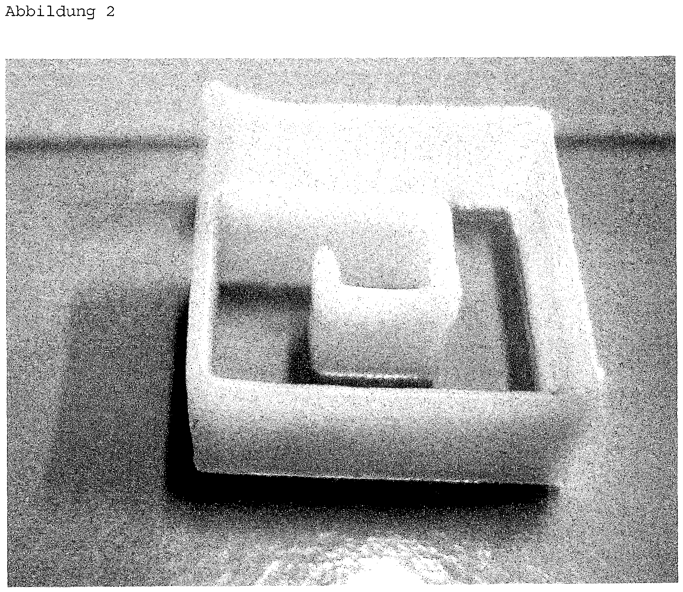

**Jetting-Beispiel J1:** B1 wurde mit den in Tabelle 3 angegebenen Jetting-Düsenparametern auf einem Glas-Objektträger der Fläche 25 x 75 mm tröpfchenweise zu einer Rechteck-Spirale mit einer Wandstärke von ca. 700 $\mu$m und einer Kantenlänge von 15 mm und einer Höhe von 10 mm abgeschieden. Die rheologischen Eigenschaften der SM-Schmelze ermöglichen eine ausgezeichnete Formstabilität und Abbildungsgenauigkeit der abgeschiedenen Geometrie. Es resultierte ein stabiler Formkörper ohne schrumpfungsbedingte Ablösung von der Glasplatte (vgl. Abbildung 2).

**Jetting-Beispiel J2:** B2 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J3:** B3 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J4:** B4 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J5:** B5 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J6:** B6 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J7:** B7 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J8:** B8 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J9:** B9 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

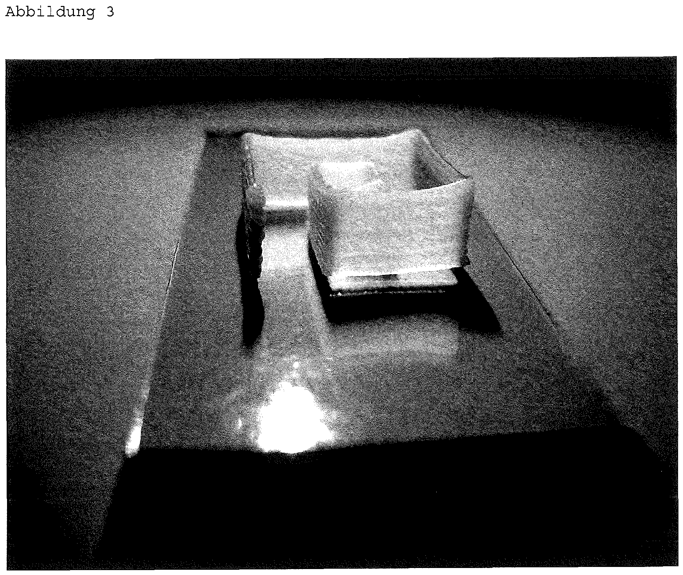

**Jetting-Beispiel J10 (nicht erfindungsgemäß):** B10 wurde mit den in Tabelle 3 angegebenen Jetting-Düsenparametern abgeschieden. Es resultierte ein stabiler Formkörper mit schrumpfbedingter Ablösung von der Glasplatte (vgl. Abbildung 3).

**Jetting-Beispiel J11 (nicht erfindungsgemäß):** B11 wurde mit den in Tabelle 3 angegebenen Jetting-Düsenparametern abgeschieden. Es resultierte ein stabiler Formkörper mit schrumpfbedingter Ablösung von der Glasplatte analog J9.

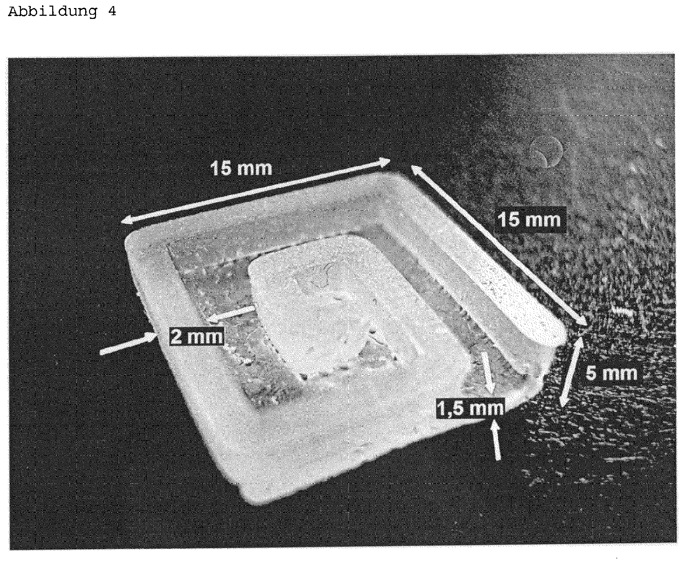

**Jetting-Beispiel J12:** SEMICOSIL® 810 UV 1K, eine durch UV-Licht induziert additions-vernetzende, transluzente Siliconkautschukmasse mit einer Viskosität von ca. 310.000 mPa.s (bei 0,5 s$^{-1}$) und einer Vulkanisathärte Shore A von 40 (erhältlich bei WACKER CHEMIE AG) wurde mit den in Tabelle 4 angegebenen Jetting-Düsenparametern auf einem Glas-Objektträger der Fläche 25 x 75 mm tröpfchenweise zu einer Rechteck-Spirale mit einer Wandstärke von 2 mm, einer Kantenlänge von 15 mm und einer Höhe von 3,5 mm abgeschieden. Die Spirale wurde in der oben beschriebenen Offline-UV-Kammer und den dort genannten Vernetzungsparametern vernetzt. Anschließend wurde nach Reinigung des Düsenkopfs bzw. der Zuleitungen und Austausch der Kartusche der Hohlraum der Spirale mit Stützmaterial B3 ausgejetted (Jetting-Düsenparameter s. Tabelle 4). Anschließend wurde nach erneuter Reinigung des Düsenkopfs bzw. der Zuleitungen und Austausch der S-M-Kartusche gegen eine Kartusche SEMICOSIL® 810 UV 1K ein Deckel mit einer Dicke von 1,5 mm auf die Spirale gedruckt, wie oben beschrieben vernetzt und das Stützmaterial mit Wasser ausgewaschen. Der erhaltene Formkörper ist in Abbildung 4 gezeigt.

**Tabelle 3**

| | Bsp. J1 | Bsp. J2 | Bsp. J3 | Bsp. J4 | Bsp. J5 | Bsp. J6 | Bsp. J7 | Bsp. J8 | Bsp. J9 | Bsp. J10 | Bsp. J11 |
|---|---|---|---|---|---|---|---|---|---|---|---|
| Düsen-Durchmesser ($\mu$m) | 200 | 200 | 200 | 200 | 200 | 200 | 200 | 200 | 200 | 200 | 200 |
| Rising (ms): | 0,4 | 0,4 | 0,4 | 0,4 | 0,4 | 0,4 | 0,4 | 0,4 | 0,5 | 0,4 | 0,4 |
| Falling (ms): | 0,4 | 0,5 | 0,4 | 0,3 | 0,4 | 0,4 | 0,4 | 0,4 | 0,5 | 0,4 | 0,4 |
| Open Time (ms): | 0,5 | 0,5 | 0,5 | 0,5 | 0,5 | 0,5 | 0,5 | 0,5 | 0,4 | 0,5 | 0,5 |
| Needle Lift (%): | 70 | 70 | 70 | 100 | 60 | 100 | 100 | 70 | 60 | 100 | 100 |
| Delay (ms): | 38 | 38 | 38 | 38 | 38 | 38 | 38 | 38 | 38 | 38 | 38 |
| Heizung Kartusche (°C) | 60 | 52 | 55 | 70 | 50 | 55 | 55 | 55 | 62 | 55 | 70 |
| Heizung Düse (°C): | 60 | 52 | 55 | 70 | 50 | 55 | 55 | 55 | 62 | 55 | 70 |
| Kartuschen-Vordruck (bar) | 4 | 4 | 4 | 4 | 4 | 4 | 4 | 4 | 4 | 4 | 4 |
| Voxeldurchmesser ($\mu$m) | 610 | 716 | 659 | 537 | 628 | 750 | 655 | 674 | 651 | 574 | 759 |

(fortgesetzt)

| | Bsp. J1 | Bsp. J2 | Bsp. J3 | Bsp. J4 | Bsp. J5 | Bsp. J6 | Bsp. J7 | Bsp. J8 | Bsp. J9 | Bsp. J10 | Bsp. J11 |
|---|---|---|---|---|---|---|---|---|---|---|---|
| Schrumpf | nein | nein | nein | nein | nein | nein | nein | nein | nein | ja | ja |

**Tabelle 4**

| | Beispiel J12 | |
|---|---|---|
| | Siliconmasse | Stützmaterial B3 |
| Düsen-Durchmesser ($\mu$m) | 200 | 200 |
| Rising (ms): | 0,3 | 0,4 |
| Falling (ms): | 0,1 | 0,4 |
| Open Time (ms): | 15 | 0,5 |
| Needle Lift (%): | 100 | 90 |
| Delay (ms) | 25 | 38 |
| Heizung Düse (°C) : | 40 | 55 |
| Heizung Kartusche (°C) | - | 55 |
| Kartuschen-Vordruck (bar) | 3,0 | 4 |
| Voxeldurchmesser ($\mu$m) | 700 | 700 |

**Patentansprüche**

1. Verfahren zum additiven Aufbau von Formkörpern (8) durch ortsspezifische Ausbringung eines strukturbildenden Materials (sbM) = (6b), **dadurch gekennzeichnet, dass**
gleichzeitig oder zeitlich versetzt mindestens ein Stützmaterial (SM)=(6a) in Bereiche ausgebracht wird, die frei von sbM (6b) bleiben,
wobei das Ausbringen des SM (6a) über eine Vorrichtung erfolgt, die mindestens eine Ausbringeinheit (1a) für das SM (6a) aufweist, die in x-, y- und z-Richtung mit einer Genauigkeit von mindestens $\pm$ 100 $\mu$m positioniert werden kann, und somit durch das ortsspezifische Ausbringen des SM (6a) sowohl in der x,y-Arbeitsebene, als auch in z-Richtung die Stützstruktur aus SM (6a) für den Formkörper (8) sukzessive aufbaut,
mit der Maßgabe, dass das SM (6a)

   - bei 70 °C eine strukturviskose, viskoelastische Zusammensetzung ist, enthaltend

      (A) eine Polyetherzusammensetzung umfassend

         (A1) mindestens einen ersten Polyether mit einem Festpunkt von unter 35 °C und
         (A2) mindestens einen zweiten Polyether mit einem Festpunkt von 35 °C oder darüber,
         wobei der Anteil des zweiten Polyethers (A2) bezogen auf das Gesamtgewicht der Polyetherzusammensetzung 5 Gew.-% oder mehr bis 70 Gew.-% oder weniger beträgt, und

      (B) mindestens ein partikuläres rheologisches Additiv,
      (C) optional weitere Zusatzstoffe

   - eine Scherviskosität von höchstens 10 Pas aufweist, gemessen bei 70 °C und einer Scherrate von 100 s$^{-1}$ mittels eines Rheometers mit Platte-Platte-Geometrie mit einem Durchmesser von 25 mm bei einer Spaltweite von 300 $\mu$m,
   - einen Speichermodul G' von mindestens 100 Pa, gemessen bei 70 °C und
   - eine Verfestigungstemperatur von 20 °C oder mehr bis 60 °C oder weniger aufweist,

und nach Abschluss des Aufbaus des Formkörpers (8), das SM (6a) aus dem Formkörper (8) entfernt wird, wobei

- der Festpunkt mittels DSC gemäß DIN EN ISO 11357-3 bestimmt wird und
- die Verfestigungstemperatur auf einem Rheometer mit Platte-Platte-Geometrie, Durchmesser 25 mm und Spaltweite von 300 $\mu$m, mittels Temperatursweep unter dynamischer Scherbelastung ermittelt wird, wobei die Probe schrittweise mit einer Abkühlrate von 1,5 K/min von 70 °C auf 20 °C abgekühlt wird und die Probe mit einer konstanten Deformation von 0,1% bei einer konstanten Frequenz von 10 Hz belastet wird.

2. Verfahren gemäß Anspruch 1 **dadurch gekennzeichnet, dass** der erste Polyether (A1) und der zweite Polyether (A2) unabhängig voneinander aus der Gruppe bestehend aus Polyethylenglycol, Polypropylenglycol, Polyethylenglycol-Polypropylenglycol-Copolymerisaten und deren Monoethern ausgewählt werden.

3. Verfahren gemäß einem der Ansprüche 1 oder 2 **dadurch gekennzeichnet, dass** der erste Polyether (A1) aus der Gruppe bestehend aus

- einem Polyethylenglykol oder einem Monoether davon mit einer zahlenmittleren molaren Masse Mn von weniger als 1.000 g/mol,
- einem Polypropylenglykol oder einem Monoether davon mit einer zahlenmittleren molaren Masse Mn von weniger als 2.000 g/mol und
- einem Polyethylenglycol-Polypropylenglycol-Copolymerisat oder einem Monoether davon mit einer zahlenmittleren molaren Masse Mn von weniger als 2.000 g/mol

ausgewählt wird,
wobei die zahlenmittlere molare Masse Mn durch Size Exclusion Chromatography, wie in der Beschreibung angegeben, ermittelt wird.

4. Verfahren gemäß einem der Ansprüche 1 bis 3 **dadurch gekennzeichnet, dass** der zweite Polyether (A2) aus der Gruppe bestehend aus

- einem Polyethylenglykol oder einem Monoether davon mit einer zahlenmittleren molaren Masse Mn von 1.000 g/mol oder mehr und
- einem Polyethylenglycol-Polypropylenglycol-Copolymerisat oder einem Monoether davon mit einer zahlenmittleren molaren Masse Mn von 2.000 g/mol oder mehr

ausgewählt wird,
wobei die zahlenmittlere molare Masse Mn durch Size Exclusion Chromatography, wie in der Beschreibung angegeben, ermittelt wird.

5. Verfahren gemäß einem der Ansprüche 1 bis 4 **dadurch gekennzeichnet, dass** der erste Polyether (A1) ein Polyethylenglykol mit einer zahlenmittleren molaren Masse Mn von weniger als 1.000 g/mol ist, wobei die zahlenmittlere molare Masse Mn durch Size Exclusion Chromatography, wie in der Beschreibung angegeben, ermittelt wird.

6. Verfahren gemäß einem der Ansprüche 1 bis 5 **dadurch gekennzeichnet, dass** der zweite Polyether (A2) ein Polyethylenglykol mit einer zahlenmittleren molaren Masse Mn 1.000 g/mol oder mehr ist wobei die zahlenmittlere molare Masse Mn durch Size Exclusion Chromatography, wie in der Beschreibung angegeben, ermittelt wird.

7. Verfahren gemäß einem der Ansprüche 1 bis 6 **dadurch gekennzeichnet, dass** der erste Polyether (A1) ein Polyethylenglykol mit einer zahlenmittleren molaren Masse Mn von weniger als 800 g/mol ist, wobei die zahlenmittlere molare Masse Mn durch Size Exclusion Chromatography, wie in der Beschreibung angegeben, ermittelt wird.

8. Verfahren gemäß einem der Ansprüche 1 bis 7 **dadurch gekennzeichnet, dass** der zweite Polyether (A2) ein Polyethylenglykol mit einer zahlenmittleren molaren Masse Mn von 2.000 g/mol oder mehr ist, wobei die zahlenmittlere molare Masse Mn durch Size Exclusion Chromatography, wie in der Beschreibung angegeben, ermittelt wird.

9. Verfahren gemäß einem der Ansprüche 1 bis 8 **dadurch gekennzeichnet, dass** der Anteil des zweiten Polyethers (A2), bezogen auf das Gesamtgewicht der Polyetherzusammensetzung (A), 10 Gew.-% oder mehr bis 65 Gew.-% oder weniger beträgt.

**10.** Verfahren gemäß einem der Ansprüche 1 bis 9 **dadurch gekennzeichnet, dass** der Anteil des zweiten Polyethers (A2), bezogen auf das Gesamtgewicht der Polyetherzusammensetzung (A), 15 Gew.-% oder mehr bis 60 Gew.-% oder weniger beträgt.

**11.** Verfahren gemäß einem der Ansprüche 1 bis 10 **dadurch gekennzeichnet, dass** Komponente (B) zumindest eine hydrophobe Kieselsäure mit einer Silanolgruppendichte von kleiner 1,8 Silanolgruppen pro $nm^2$, bestimmt mittels Säure-Base-Titration, umfasst.

**12.** Verfahren gemäß einem der Ansprüche 1 bis 11 **dadurch gekennzeichnet, dass** Komponente (B) zumindest eine hydrophobe Kieselsäure mit einer Methanolzahl von mindestens 30 umfasst, wobei die Methanolzahl dem prozentuale Anteil von Methanol entspricht, welcher einer Wasserphase zugesetzt werden muss, um vollständige Benetzung der Kieselsäure zu erreichen, wobei vollständige Benetzung dabei ein vollständiges Einsinken der Kieselsäure in der Wasser-Methanol-Testflüssigkeit bedeutet.

**13.** Verfahren gemäß einem der Ansprüche 1 bis 12 **dadurch gekennzeichnet, dass** das SM (6a) vom Formkörper (8) mechanisch oder durch lösen in einem Lösungsmittel entfernt wird.

**Claims**

**1.** Process for the additive manufacturing of mouldings (8) via site-specific delivery of a structure-forming material (sfm) = (6b), **characterized in that** simultaneously or at staggered intervals at least one supportive material (sm) = (6a) is delivered into regions which remain free from sfm (6b),
where the delivery of the sm (6a) is achieved by way of a device which has at least one delivery unit (1a) for the sm (6a), where the said unit can be positioned in x-, y- and z-direction with a precision of at least $\pm$ 100 $\mu$m, and thus via the site-specific delivery of the sm (6a) not only in the x, y-operating plane but also in the z-direction successively constructs the supportive structure made of sm (6a) for the moulding (8),
with the proviso that the sm (6a)

    - at 70°C is a pseudoplastic, viscoelastic composition comprising

        (A) a polyether composition comprising

        (A1) at least one first polyether having a melting point of lower than 35°C and
        (A2) at least one second polyether having a melting point of 35°C or higher,
        wherein the proportion of the second polyether (A2) based on the total weight of the polyether composition is 5% by weight or more to 70% by weight or less, and

        (B) at least one particulate rheological additive,
        (C) optionally other additional substances

    - has a shear viscosity of at most 10 Pas measured at 70°C with shear rate 100 $s^{-1}$ using a rheometer with plate-on-plate geometry with a diameter of 25 mm at a gap width of 300 $\mu$m,
    - has a storage modulus G' of at least 100 Pa, measured at 70°C and
    - a solidification temperature of from 20°C or more up to 60°C or less,

and once the manufacturing of the moulding (8) has been concluded the sm (6a) is removed from the moulding (8), where

    - the melting point is determined by means of DSC in accordance with DIN EN ISO 11357-3 and
    - the solidification temperature is determined in a plate-on-plate rheometer, diameter 25 mm and gap width 30 $\mu$m, by means of temperature sweep under dynamic shear loading, where the sample is cooled stepwise at a cooling rate of 1.5 K/min from 70°C to 20°C and is subjected to constant deformation of 0.1% with a constant frequency of 10 Hz.

**2.** Process according to Claim 1, **characterized in that** the first polyether (A1) and the second polyether (A2) are independently of one another selected from the group consisting of polyethylene glycol, polypropylene glycol, polyethylene glycol-polypropylene glycol copolymers and monoethers thereof.

3. Process according to either of Claims 1 and 2, **characterized in that** the first polyether (A1) is selected from the group consisting of

- a p olyethylene glycol or a monoether thereof having a number-average molar mass Mn of less than 1000 g/mol,
- a polypropylene glycol or a monoether thereof having a number-average molar mass Mn of less than 2000 g/mol and
- a polyethylene glycol-polypropylene glycol copolymer or a monoether thereof having a number-average molar mass Mn of less than 2000 g/mol,

where the number-average molar mass Mn is determined by size exclusion chromatography, as stated in the description.

4. Process according to any of Claims 1 to 3, **characterized in that** the second polyether (A2) is selected from the group consisting of

- a polyethylene glycol or a monoether thereof having a number-average molar mass Mn of 1000 g/mol or more and
- a polyethylene glycol-polypropylene glycol copolymer or a monoether thereof having a number-average molar mass Mn of 2000 g/mol or more,

where the number-average molar mass Mn is determined by size exclusion chromatography, as stated in the description.

5. Process according to any of Claims 1 to 4, **characterized in that** the first polyether (A1) is a polyethylene glycol having a number-average molar mass Mn of less than 1000 g/mol, where the number-average molar mass Mn is determined by size exclusion chromatography, as stated in the description.

6. Process according to any of Claims 1 to 5, **characterized in that** the second polyether (A2) is a polyethylene glycol having a number-average molar mass Mn of 1000 g/mol or more, where the number-average molar mass Mn is determined by size exclusion chromatography, as stated in the description.

7. Process according to any of Claims 1 to 6, **characterized in that** the first polyether (A1) is a polyethylene glycol having a number-average molar mass Mn of less than 800 g/mol, where the number-average molar mass Mn is determined by size exclusion chromatography, as stated in the description.

8. Process according to any of Claims 1 to 7, **characterized in that** the second polyether (A2) is a polyethylene glycol having a number-average molar mass Mn of 2000 g/mol or more, where the number-average molar mass Mn is determined by size exclusion chromatography, as stated in the description.

9. Process according to any of Claims 1 to 8, **characterized in that** the proportion of the second polyether (A2) based on the total weight of the polyether composition (A) is 10% by weight or more to 65% by weight or less.

10. Process according to any of Claims 1 to 9, **characterized in that** the proportion of the second polyether (A2) based on the total weight of the polyether composition (A) is 15% by weight or more to 60% by weight or less.

11. Process according to any of Claims 1 to 10, **characterized in that** component (B) comprises at least one hydrophobic silica having a silanol group density of less than 1.8 silanol groups per $nm^2$ determined by acid-base titration.

12. Process according to any of Claims 1 to 11, **characterized in that** component (B) comprises at least one hydrophobic silica having a methanol number of at least 30, wherein the methanol number is the percentage proportion of methanol which must be added to a water phase to achieve complete wetting of the silica, wherein complete wetting means a complete sinking of the silica in the water-methanol test liquid.

13. Process according to any of Claims 1 to 12, **characterized in that** the sm (6a) of the moulding (8) is removed mechanically or via dissolution in a solvent.

**Revendications**

1. Procédé additif pour la fabrication de corps moulés (8) par application en des endroits spécifiques d'un matériau structurant (sbM) = (6b), **caractérisé en ce qu'**au moins un matériau support (SM) = (6a) est appliqué simultanément ou en décalage temporel dans des zones qui restent exemptes de sbM (6b),
l'application de SM (6a) ayant lieu par un dispositif qui comprend au moins une unité d'application (1a) pour SM (6a), qui peut être positionnée dans les directions x, y et z avec une précision d'au moins $\pm$ 100 $\mu$m, et forme ainsi successivement la structure support de SM (6a) pour le corps moulé (8) par l'application en des endroits spécifiques de SM (6a) aussi bien dans le plan de travail x,y que dans la direction z,
à condition que SM (6a)

   - soit une composition viscoélastique à viscosité intrinsèque à 70 °C, contenant :

      (A) une composition de polyéther comprenant :

         (A1) au moins un premier polyéther ayant un point solide de moins de 35 °C et
         (A2) au moins un deuxième polyéther ayant un point solide de 35 °C ou plus,
         la proportion du deuxième polyéther (A2), par rapport au poids total de la composition de polyéther, étant de 5 % en poids ou plus à 70 % en poids ou moins, et

      (B) au moins un additif rhéologique particulaire,
      (C) éventuellement d'autres additifs,

   - présente une viscosité sous cisaillement d'au plus 10 Pas, mesurée à 70 °C et à un taux de cisaillement de 100 s$^{-1}$ au moyen d'un rhéomètre à géométrie plaque-plaque d'un diamètre de 25 mm avec une largeur de fente de 300 $\mu$m,
   - un module de stockage G' d'au moins 100 Pa, mesuré à 70 °C, et
   - une température de solidification de 20 °C ou plus à 60 °C ou moins,

   et après la fin de la formation du corps moulé (8), SM (6a) est éliminé du corps moulé (8),

      - le point solide étant déterminé par DSC selon DIN EN ISO 11357-3 et
      - la température de solidification étant déterminée sur un rhéomètre à géométrie plaque-plaque d'un diamètre de 25 mm et d'une largeur de fente de 300 $\mu$m, par balayage en température avec sollicitation par cisaillement dynamique, l'échantillon étant graduellement refroidi à un taux de refroidissement de 1,5 K/min de 70 °C à 20 °C, et l'échantillon étant sollicité à une déformation constante de 0,1 % à une fréquence constante de 10 Hz.

2. Procédé selon la revendication 1, **caractérisé en ce que** le premier polyéther (A1) et le deuxième polyéther (A2) sont choisis indépendamment l'un de l'autre dans le groupe constitué par le polyéthylène glycol, le polypropylène glycol, les copolymères de polyéthylène glycol-polypropylène glycol et leurs monoéthers.

3. Procédé selon l'une quelconque des revendications 1 ou 2, **caractérisé en ce que** le premier polyéther (A1) est choisi dans le groupe constitué par :

   - un polyéthylène glycol ou un monoéther de celui-ci ayant une masse molaire moyenne en nombre Mn de moins de 1 000 g/mol,
   - un polypropylène glycol ou un monoéther de celui-ci ayant une masse molaire moyenne en nombre Mn de moins de 2 000 g/mol, et
   - un copolymère de polyéthylène glycol-polypropylène glycol ou un monoéther de celui-ci ayant une masse molaire moyenne en nombre Mn de moins de 2 000 g/mol,

   la masse molaire moyenne en nombre Mn étant déterminée par chromatographie d'exclusion stérique, tel qu'indiqué dans la description.

4. Procédé selon l'une quelconque des revendications 1 à 3, **caractérisé en ce que** le deuxième polyéther (A2) est choisi dans le groupe constitué par :

   - un polyéthylène glycol ou un monoéther de celui-ci ayant une masse molaire moyenne en nombre Mn de 1 000 g/mol ou plus, et
- un copolymère de polyéthylène glycol-polypropylène glycol ou un monoéther de celui-ci ayant une masse molaire moyenne en nombre Mn de 2 000 g/mol ou plus,

la masse molaire moyenne en nombre Mn étant déterminée par chromatographie d'exclusion stérique, tel qu'indiqué dans la description.

5. Procédé selon l'une quelconque des revendications 1 à 4, **caractérisé en ce que** le premier polyéther (A1) est un polyéthylène glycol ayant une masse molaire moyenne en nombre Mn de moins de 1 000 g/mol, la masse molaire moyenne en nombre Mn étant déterminée par chromatographie d'exclusion stérique, tel qu'indiqué dans la description.

6. Procédé selon l'une quelconque des revendications 1 à 5, **caractérisé en ce que** le deuxième polyéther (A2) est un polyéthylène glycol ayant une masse molaire moyenne en nombre Mn de 1 000 g/mol ou plus, la masse molaire moyenne en nombre Mn étant déterminée par chromatographie d'exclusion stérique, tel qu'indiqué dans la description.

7. Procédé selon l'une quelconque des revendications 1 à 6, **caractérisé en ce que** le premier polyéther (A1) est un polyéthylène glycol ayant une masse molaire moyenne en nombre Mn de moins de 800 g/mol, la masse molaire moyenne en nombre Mn étant déterminée par chromatographie d'exclusion stérique, tel qu'indiqué dans la description.

8. Procédé selon l'une quelconque des revendications 1 à 7, **caractérisé en ce que** le deuxième polyéther (A2) est un polyéthylène glycol ayant une masse molaire moyenne en nombre Mn de 2 000 g/mol ou plus, la masse molaire moyenne en nombre Mn étant déterminée par chromatographie d'exclusion stérique, tel qu'indiqué dans la description.

9. Procédé selon l'une quelconque des revendications 1 à 8, **caractérisé en ce que** la proportion du deuxième polyéther (A2), par rapport au poids total de la composition de polyéther (A), est de 10 % en poids ou plus à 65 % en poids ou moins.

10. Procédé selon l'une quelconque des revendications 1 à 9, **caractérisé en ce que** la proportion du deuxième polyéther (A2), par rapport au poids total de la composition de polyéther (A), est de 15 % en poids ou plus à 60 % en poids ou moins.

11. Procédé selon l'une quelconque des revendications 1 à 10, **caractérisé en ce que** le composant (B) comprend au moins une silice hydrophobe ayant une densité de groupes silanol de moins de 1,8 groupe silanol par nm$^2$, déterminée par titrage acide-base.

12. Procédé selon l'une quelconque des revendications 1 à 11, **caractérisé en ce que** le composant (B) comprend au moins une silice hydrophobe ayant un indice de méthanol d'au moins 30, l'indice de méthanol correspondant à la proportion en pourcentage de méthanol qui doit être ajoutée à une phase aqueuse pour obtenir un mouillage complet de la silice, un mouillage complet signifiant un enfoncement complet de la silice dans le liquide d'essai eau-méthanol.

13. Procédé selon l'une quelconque des revendications 1 à 12, **caractérisé en ce que** SM (6a) est éliminé du corps moulé (8) mécaniquement ou par dissolution dans un solvant.

Abbildung 1

Abbildung 2

Abbildung 3

Abbildung 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150028523 A1
- US 20130337277 A1
- US 7368484 B2
- WO 2014092205 A1
- EP 686676 B1
- EP 1433749 A1
- DE 102013226494 A1

**In der Beschreibung aufgeführte Nicht-Patentliteratur**

- **A. GEBHARDT.** Generative Fertigungsverfahren. Carl Hanser Verlag, 2013
- **G.W. SEARS.** *Anal. Chem.,* 1956, vol. 28, 1981
- **T. MEZGER, G.** The Rheology Handbook. Vincentz Network GmbH & Co. KG, 2006, 147ff
- **G. W. SEARS et al.** *Analytical Chemistry,* 1956, vol. 28, 1981ff